# EUROPEAN PATENT APPLICATION

(11) **EP 4 498 337 A1**
(43) Date of publication of application: **29.01.2025**
(21) Application number: 24184010.7
(22) Date of filing: 24.06.2024
(51) Int. Cl.: G06V 20/52

(54) **HEIGHT DETECTION METHOD**

(30) Priority: 28.07.2023 US 202318361333
(71) Applicant: Volvo Car Corporation, 405 31 Göteborg (SE)
(72) Inventor: HEURLIN, Fredrik, 40531 Göteborg (SE)
(74) Representative: Maiwald GmbH

(57) **Abstract**

In an aspect, a system is described. The system comprises: a height warning module that is configured to: detect one or more objects attached to a vehicle (402); determine a total height of the vehicle (404); obtain a first travel route of the vehicle to reach a destination point (406); extract first height restriction information of one or more first restriction obstacles located along the first travel route (408); determine a first clearance height based on the total height of the vehicle and the first height restriction information of the one or more first restriction obstacles (410); and compute a first probability of safe passage of the vehicle along with the one or more objects through the one or more first restriction obstacles as true when the first clearance height is greater than a threshold clearance (412).

## Description

### FIELD OF THE INVENTION

The present disclosure relates generally to a field of transportation. More specifically, the present disclosure relates to systems and methods of safe passage of vehicles through underpasses, bridges, tunnels, etc.

### BACKGROUND

"A driver may encounter various overhead objects in the path of a vehicle when driving. The overhead objects may include persistent objects, such as a roadway overpass, a tunnel, a traffic sign, or other overhead objects that are a permanent fixture along the roadway, and/or non-persistent objects, such as tree branches, which may be removed. Some overhead objects, such as a tunnel, may have warning signs which may indicate a clearance height, whereas, other overhead objects, such as a tree branch, may not provide the clearance height to avoid the overhead object. A driver, however, may forget or not know the height of their vehicle, the height of a load on the vehicle and/or not see the overhead object, and thus, the driver may be unable to avoid the overhead obj ect.

Even if the driver identifies the overhead object, the driver may not be able to avoid the overhead object, while maintaining travel in the direction of the destination. For example, if a roadway that leads to a tunnel does not have an exit or other path to avoid the tunnel between the vehicle, which has a height above the clearance height of the tunnel, and the tunnel entrance, the vehicle may have to stop before the tunnel entrance and turn around.

Additionally, various overhead objects, such as a tree branch, do not have warning signs that specify the height, and thus, a driver may have difficulty in determining whether a collision may occur." [Source: United States Patent application US10843694B2, titled "Vehicle height detection and environmental warning system", published on May 2020]

Therefore, there is a long-felt need for a system and method that determines total height of the vehicles comprising overhead load and provide assistance for safe passage of the vehicles without collision.

### SUMMARY

The following presents a summary to provide a basic understanding of one or more embodiments described herein. This summary is not intended to identify key or critical elements or delineate any scope of the different embodiments and/or any scope of the claims. The sole purpose of the summary is to present some concepts in a simplified form as a prelude to the more detailed description presented herein.

In an aspect, a system is described. The system comprises: a height warning module that is configured to: detect one or more objects attached to a vehicle; determine a total height of the vehicle, wherein the total height of the vehicle comprises a first height of the vehicle and a second height of the one or more objects; obtain a first travel route of the vehicle to reach a destination point; extract first height restriction information of one or more first restriction obstacles located along the first travel route; determine a first clearance height based on the total height of the vehicle and the first height restriction information of the one or more first restriction obstacles; compute a first probability of safe passage of the vehicle, along with the one or more objects through the one or more first restriction obstacles, as true when the first clearance height is greater than a threshold clearance and communicate maneuvering commands to an electric drive unit to maneuver the vehicle; and communicate a signal to a control module to dynamically adjust an adjustable roof rack to reduce the total height of the vehicle upon computing the first probability as false, wherein the first probability is computed as false when the first clearance height is lesser than a threshold clearance height.

In another aspect, a method is described. The method comprises: detecting one or more objects attached to a vehicle; determining a total height of the vehicle, wherein the total height of the vehicle comprises a first height of the vehicle and a second height of the one or more objects; obtaining a first travel route of the vehicle to reach a destination point; extracting first height restriction information of one or more first restriction obstacles located along the first travel route; determining a first clearance height based on the total height of the vehicle and the first height restriction information of the one or more first restriction obstacles; computing a first probability of safe passage of the vehicle, along with the one or more objects through the one or more first restriction obstacles, as true when the first clearance height is greater than a threshold clearance and communicating maneuvering commands to an electric drive unit to maneuver the vehicle; and communicating a signal to a control module to dynamically adjust an adjustable roof rack to reduce the total height of the vehicle upon computing the first probability as false, wherein the first probability is computed as false when the first clearance height is lesser than a threshold clearance height.

In yet another aspect, a non-transitory storage medium storing a sequence of instructions is described. The non-transitory storage medium which when executed by a processor causes: detecting one or more objects attached to a vehicle; determining a total height of the vehicle, wherein the total height of the vehicle comprises a first height of the vehicle and a second height of the one or more objects; obtaining a first travel route of the vehicle to reach a destination point; extracting first height restriction information of one or more first restriction obstacles located along the first travel route; determining a first clearance height based on the total height of the vehicle and the first height restriction information of the one or more first restriction obstacles; computing a first probability of safe passage of the vehicle, along with the one or more objects through the one or more first restriction obstacles, as true when the first clearance height is greater than a threshold clearance and communicating maneuvering commands to an electric drive unit to maneuver the vehicle; and communicating a signal to a control module to dynamically adjust an adjustable roof rack to reduce the total height of the vehicle upon computing the first probability as false, wherein the first probability is computed as false when the first clearance height is lesser than a threshold clearance height.

The methods and systems disclosed herein may be implemented in any means for achieving various aspects and may be executed in a form of a non-transitory machine-readable medium embodying a set of instructions that, when executed by a machine, causes the machine to perform any of the operations disclosed herein. Other features will be apparent from the accompanying drawings and from the detailed description that follows.

### BRIEF DESCRIPTION OF THE FIGURES

Aspects of the present disclosure will now be described in more detail, with reference to the appended drawings showing exemplary embodiments, in which:
**FIG. 1** illustrates a system, according to one or more embodiments.
**FIG. 2** illustrates components of a vehicle, according to one or more embodiments.
**FIG. 3A** **and** **3B** illustrate a vehicle approaching a restriction obstacle, according to one or more embodiments.
**FIG. 4** illustrates a system, according to one or more embodiments.
**FIG. 5** illustrates a method, according to one or more embodiments.
**FIG. 6** illustrates a non-transitory storage medium executed by the processor, according to one or more embodiments.
**FIG. 7** illustrates a flowchart illustrating determination of total height of the vehicles comprising overhead load and providing assistance to vehicles, according to one or more embodiments.
**FIG. 8** illustrates a vehicle to vehicle data transfer, according to one or more embodiments.
**FIG. 9A and 9B** illustrate a determination of total height of the vehicle and distance between the vehicle and the restriction obstacle, according to one or more embodiments.
**FIG. 10A, 10B, and 10C** illustrate sample messages received by a target vehicle, according to one or more embodiments.
**FIG. 11A** shows a block diagram of a cyber security module in view of the system and server.
**FIG. 11B** shows an embodiment of the cyber security module.
**FIG. 11C** shows another embodiment of the cyber security module.
**FIG. 12A** shows a structure of a neural network / machine learning model with a feedback loop.
**FIG. 12B** shows a structure of the neural network / machine learning model with reinforcement learning.

Other features of the present embodiments will be apparent from the accompanying drawings and from the detailed description that follows.

### DETAILED DESCRIPTION

For simplicity and clarity of illustration, the figures illustrate the general manner of construction. The description and figures may omit the descriptions and details of well-known features and techniques to avoid unnecessarily obscuring the present disclosure. The figures exaggerate the dimensions of some of the elements relative to other elements to help improve understanding of embodiments of the present disclosure. The same reference numeral in different figures denotes the same element.

Although the detailed description herein contains many specifics for the purpose of illustration, a person of ordinary skill in the art will appreciate that many variations and alterations to the details are considered to be included herein.

Accordingly, the embodiments herein are without any loss of generality to, and without imposing limitations upon, any claims set forth. The terminology used herein is for the purpose of describing particular embodiments only and is not limiting. Unless defined otherwise, all technical and scientific terms used herein have the same meaning as commonly understood by one with ordinary skill in the art to which this disclosure belongs.

Unless defined otherwise, all technical and scientific terms used herein have the same meaning as commonly understood by one with ordinary skill in the art to which this disclosure belongs.

As used herein, the articles "a" and "an" used herein refer to one or to more than one (i.e., to at least one) of the grammatical object of the article. By way of example, "an element" means one element or more than one element. Moreover, usage of articles "a" and "an" in the subject specification and annexed drawings construe to mean "one or more" unless specified otherwise or made clear from context to mean a singular form.

As used herein, the terms "example" and/or "exemplary" mean serving as an example, instance, or illustration. For the avoidance of doubt, such examples do not limit the herein described subject matter. In addition, any aspect or design described herein as an "example" and/or "exemplary" is not necessarily preferred or advantageous over other aspects or designs, nor does it preclude equivalent exemplary structures and techniques known to those of ordinary skill in the art.

As used herein, the terms "first," "second," "third," and the like in the description and in the claims, if any, distinguish between similar elements and do not necessarily describe a particular sequence or chronological order. The terms are interchangeable under appropriate circumstances such that the embodiments herein are, for example, capable of operation in sequences other than those illustrated or otherwise described herein. Furthermore, the terms "include," "have," and any variations thereof, cover a non-exclusive inclusion such that a process, method, system, article, device, or apparatus that comprises a list of elements is not necessarily limiting to those elements, but may include other elements not expressly listed or inherent to such process, method, system, article, device, or apparatus.

As used herein, the terms "left," "right," "front," "back," "top," "bottom," "over," "under" and the like in the description and in the claims, if any, are for descriptive purposes and not necessarily for describing permanent relative positions. The terms so used are interchangeable under appropriate circumstances such that the embodiments of the apparatus, methods, and/or articles of manufacture described herein are, for example, capable of operation in other orientations than those illustrated or otherwise described herein.

No element act, or instruction used herein is critical or essential unless explicitly described as such. Furthermore, the term "set" includes items (e.g., related items, unrelated items, a combination of related items and unrelated items, etc.) and may be interchangeable with "one or more". Where only one item is intended, the term "one" or similar language is used. Also, the terms "has," "have," "having," or the like are open-ended terms. Further, the phrase "based on" means "based, at least in part, on" unless explicitly stated otherwise.

As used herein, the terms "system," "device," "unit," and/or "module" refer to a different component, component portion, or component of the various levels of the order. However, other expressions that achieve the same purpose may replace the terms.

As used herein, the terms "couple," "coupled," "couples," "coupling," and the like refer to connecting two or more elements mechanically, electrically, and/or otherwise. Two or more electrical elements may be electrically coupled together, but not mechanically or otherwise coupled together. Coupling may be for any length of time, e.g., permanent, or semi-permanent or only for an instant. "Electrical coupling" includes electrical coupling of all types. The absence of the word "removably", "removable", and the like, near the word "coupled" and the like does not mean that the coupling, etc., in question is or is not removable.

As used herein, the term "or" means an inclusive "or" rather than an exclusive "or." That is, unless specified otherwise, or clear from context, "X employs A or B" means any of the natural inclusive permutations. That is, if X employs A; X employs B; or X employs both A and B, then "X employs A or B" is satisfied under any of the foregoing instances.

As used herein, two or more elements or modules are "integral" or "integrated" if they operate functionally together. Two or more elements are "non-integral" if each element can operate functionally independently.

As used herein, the term "real-time" refers to operations conducted as soon as practically possible upon occurrence of a triggering event. A triggering event can include receipt of data necessary to execute a task or to otherwise process information. Because of delays inherent in transmission and/or in computing speeds, the term "real-time" encompasses operations that occur in "near" real-time or somewhat delayed from a triggering event. In a number of embodiments, "real-time" can mean real-time less a time delay for processing (e.g., determining) and/or transmitting data. The particular time delay can vary depending on the type and/or amount of the data, the processing speeds of the hardware, the transmission capability of the communication hardware, the transmission distance, etc. However, in many embodiments, the time delay can be less than approximately one second, two seconds, five seconds, or ten seconds.

As used herein, the term "approximately" can mean within a specified or unspecified range of the specified or unspecified stated value. In some embodiments, "approximately" can mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

Digital electronic circuitry, or in computer software, firmware, or hardware, including the structures disclosed in this specification and their structural equivalents, or in combinations of one or more of them may realize the implementations and all of the functional operations described in this specification. Implementations may be as one or more computer program products, i.e., one or more modules of computer program instructions encoded on a computer-readable medium for execution by, or to control the operation of, data processing apparatus. The computer-readable medium may be a machine-readable storage device, a machine-readable storage substrate, a memory device, a composition of matter affecting a machine-readable propagated signal, or a combination of one or more of them. The term "computing system" encompasses all apparatus, devices, and machines for processing data, including by way of example, a programmable processor, a computer, or multiple processors or computers. The apparatus may include, in addition to hardware, code that creates an execution environment for the computer program in question, e.g., code that constitutes processor firmware, a protocol stack, a database management system, an operating system, or a combination of one or more of them. A propagated signal is an artificially generated signal (e.g., a machine-generated electrical, optical, or electromagnetic signal) that encodes information for transmission to a suitable receiver apparatus.

The actual specialized control hardware or software code used to implement these systems and/or methods is not limiting to the implementations. Thus, any software and any hardware can implement the systems and/or methods based on the description herein without reference to specific software code.

A computer program (also known as a program, software, software application, script, or code) is written in any appropriate form of programming language, including compiled or interpreted languages. Any appropriate form, including a standalone program or a module, component, subroutine, or other unit suitable for use in a computing environment may deploy it. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may execute on one computer or on multiple computers that are located at one site or distributed across multiple sites and interconnected by a communication network.

One or more programmable processors, executing one or more computer programs to perform functions by operating on input data and generating output, perform the processes and logic flows described in this specification. The processes and logic flows may also be performed by, and apparatus may also be implemented as, special purpose logic circuitry, for example, without limitation, a Field Programmable Gate Array (FPGA), an Application Specific Integrated Circuit (ASIC), Application Specific Standard Products (ASSPs), System-On-a-Chip (SOC) systems, Complex Programmable Logic Devices (CPLDs), etc.

Processors suitable for the execution of a computer program include, by way of example, both general and special purpose microprocessors, and any one or more processors of any appropriate kind of a digital computer. A processor will receive instructions and data from a read-only memory or a random-access memory or both. Elements of a computer can include a processor for performing instructions and one or more memory devices for storing instructions and data. A computer will also include, or is operatively coupled to receive data, transfer data or both, to/from one or more mass storage devices for storing data, e.g., magnetic disks, magneto optical disks, optical disks, or solid-state disks. However, a computer need not have such devices. Moreover, another device, e.g., a mobile telephone, a personal digital assistant (PDA), a mobile audio player, a Global Positioning System (GPS) receiver, etc. may embed a computer. Computer-readable media suitable for storing computer program instructions and data include all forms of non-volatile memory, media and memory devices, including, by way of example, semiconductor memory devices (e.g., Erasable Programmable Read-Only Memory (EPROM), Electronically Erasable Programmable Read-Only Memory (EEPROM), and flash memory devices), magnetic disks (e.g., internal hard disks or removable disks), magneto optical disks (e.g. Compact Disc Read-Only Memory (CD ROM) disks, Digital Versatile Disk-Read-Only Memory (DVD-ROM) disks) and solid-state disks. Special purpose logic circuitry may supplement or incorporate the processor and the memory.

To provide for interaction with a user, a computer may have a display device, e.g., a Cathode Ray Tube (CRT) or Liquid Crystal Display (LCD) monitor, for displaying information to the user, and a keyboard and a pointing device, e.g., a mouse or a trackball, by which the user may provide input to the computer. Other kinds of devices provide for interaction with a user as well. For example, feedback to the user may be any appropriate form of sensory feedback, e.g., visual feedback, auditory feedback, or tactile feedback; and a computer may receive input from the user in any appropriate form, including acoustic, speech, or tactile input.

A computing system that includes a back-end component, e.g., a data server, or that includes a middleware component, e.g., an application server, or that includes a front-end component, e.g., a client computer having a graphical user interface or a Web browser through which a user may interact with an implementation, or any appropriate combination of one or more such back-end, middleware, or front-end components, may realize implementations described herein. Any appropriate form or medium of digital data communication, e.g., a communication network may interconnect the components of the system. Examples of communication networks include a Local Area Network (LAN) and a Wide Area Network (WAN), e.g., Intranet and Internet.

The computing system may include clients and servers. A client and server are remote from each other and typically interact through a communication network. The relationship of the client and server arises by virtue of computer programs running on the respective computers and having a client-server relationship to each other.

Embodiments may comprise or utilize a special purpose or general purpose computer including computer hardware. Embodiments within the scope of the present invention may also include physical and other computer-readable media for carrying or storing computer-executable instructions and/or data structures. Such computer-readable media can be any media accessible by a general purpose or special purpose computer system. Computer-readable media that store computer-executable instructions are physical storage media. Computer-readable media that carry computer-executable instructions are transmission media. Thus, by way of example and not limitation, embodiments of the invention can comprise at least two distinct kinds of computer-readable media: physical computer-readable storage media and transmission computer-readable media.

Although the present embodiments described herein are with reference to specific example embodiments it will be evident that various modifications and changes may be made to these embodiments without departing from the broader spirit and scope of the various embodiments. For example, hardware circuitry (e.g., Complementary Metal Oxide Semiconductor (CMOS) based logic circuitry), firmware, software (e.g., embodied in a non-transitory machine-readable medium), or any combination of hardware, firmware, and software may enable and operate the various devices, units, and modules described herein. For example, transistors, logic gates, and electrical circuits (e.g., Application Specific Integrated Circuit (ASIC) and/or Digital Signal Processor (DSP) circuit) may embody the various electrical structures and methods.

In addition, a non-transitory machine-readable medium and/or a system may embody the various operations, processes, and methods disclosed herein. Accordingly, the specification and drawings are illustrative rather than restrictive.

Physical computer-readable storage media includes RAM, ROM, EEPROM, CD-ROM or other optical disk storage (such as CDs, DVDs, etc.), magnetic disk storage or other magnetic storage devices, solid-state disks or any other medium. They store desired program code in the form of computer-executable instructions or data structures which can be accessed by a general purpose or special purpose computer.

As used herein, the term "network" may include the Internet, a local area network, a wide area network, or combinations thereof. The network may include one or more networks or communication systems, such as the Internet, the telephone system, satellite networks, cable television networks, and various other private and public networks. In addition, the connections may include wired connections (such as wires, cables, fiber optic lines, etc.), wireless connections, or combinations thereof. Furthermore, although not shown, other computers, systems, devices, and networks may also be connected to the network. Network refers to any set of devices or subsystems connected by links joining (directly or indirectly) a set of terminal nodes sharing resources located on or provided by network nodes. The computers use common communication protocols over digital interconnections to communicate with each other. For example, subsystems may comprise the cloud. Cloud refers to servers that are accessed over the Internet, and the software and databases that run on those servers.

Further, upon reaching various computer system components, program code in the form of computer-executable instructions or data structures can be transferred automatically from transmission computer-readable media to physical computer-readable storage media (or vice versa). For example, computer-executable instructions or data structures received over a network or data link can be buffered in RAM within a Network Interface Module (NIC), and then eventually transferred to computer system RAM and/or to less volatile computer-readable physical storage media at a computer system. Thus, computer system components that also (or even primarily) utilize transmission media may include computer-readable physical storage media.

Computer-executable instructions comprise, for example, instructions and data which cause a general purpose computer, special purpose computer, or special purpose processing device to perform a certain function or group of functions. The computer-executable instructions may be, for example, binary, intermediate format instructions such as assembly language, or even source code. Although the subject matter herein described is in a language specific to structural features and/or methodological acts, the described features or acts described do not limit the subject matter defined in the claims. Rather, the herein described features and acts are example forms of implementing the claims.

While this specification contains many specifics, these do not construe as limitations on the scope of the disclosure or of the claims, but as descriptions of features specific to particular implementations. A single implementation may implement certain features described in this specification in the context of separate implementations. Conversely, multiple implementations separately or in any suitable sub-combination may implement various features described herein in the context of a single implementation. Moreover, although features described herein as acting in certain combinations and even initially claimed as such, one or more features from a claimed combination may in some cases be excised from the combination, and the claimed combination may be directed to a sub-combination or variation of a sub-combination.

Similarly, while operations depicted herein in the drawings in a particular order to achieve desired results, this should not be understood as requiring that such operations be performed in the particular order shown or in sequential order or that all illustrated operations be performed, to achieve desirable results. In certain circumstances, multitasking and parallel processing may be advantageous. Moreover, the separation of various system components in the implementations should not be understood as requiring such separation in all implementations, and it should be understood that the described program components and systems may be integrated together in a single software product or packaged into multiple software products.

Even though particular combinations of features are recited in the claims and/or disclosed in the specification, these combinations are not intended to limit the disclosure of possible implementations. Other implementations are within the scope of the claims. For example, the actions recited in the claims may be performed in a different order and still achieve desirable results. In fact, many of these features may be combined in ways not specifically recited in the claims and/or disclosed in the specification. Although each dependent claim may directly depend on only one claim, the disclosure of possible implementations includes each dependent claim in combination with every other claim in the claim set.

Further, a computer system including one or more processors and computer-readable media such as computer memory may practice the methods. In particular, one or more processors execute computer-executable instructions, stored in the computer memory, to perform various functions such as the acts recited in the embodiments.

Those skilled in the art will appreciate that the invention may be practiced in network computing environments with many types of computer system configurations including personal computers, desktop computers, laptop computers, message processors, hand-held devices, multiprocessor systems, microprocessor-based or programmable consumer electronics, network PCs, minicomputers, mainframe computers, mobile telephones, PDAs, pagers, routers, switches, etc. Distributed system environments where local and remote computer systems, which are linked (either by hardwired data links, wireless data links, or by a combination of hardwired and wireless data links) through a network, both perform tasks may also practice the invention. In a distributed system environment, program modules may be located in both local and remote memory storage devices.

The following terms and phrases, unless otherwise indicated, shall have the following meanings.

As used herein, the term "Cryptographic protocol" is also known as security protocol or encryption protocol. It is an abstract or concrete protocol that performs a security-related function and applies cryptographic methods often as sequences of cryptographic primitives. A protocol describes usage of the algorithms. A sufficiently detailed protocol includes details about data structures and representations, to implement multiple, interoperable versions of a program. Cryptographic protocols are widely used for secure application-level data transport. A cryptographic protocol usually incorporates at least some of these aspects: key agreement or establishment, entity authentication, symmetric encryption and message authentication, secured application-level data transport, non-repudiation methods, secret sharing methods, and secure multi-party computation. Hashing algorithms may be used to verify the integrity of data. Secure Socket Layer (SSL) and Transport Layer Security (TLS), the successor to SSL, are cryptographic protocols that may be used by networking switches to secure data communications over a network.

Secure application-level data transport widely uses cryptographic protocols. A cryptographic protocol usually incorporates at least some of these aspects: key agreement or establishment, entity authentication, symmetric encryption, and message authentication material construction, secured application-level data transport, non-repudiation methods, secret sharing methods, and secure multi-party computation.

Networking switches use cryptographic protocols, like Secure Socket Layer (SSL) and Transport Layer Security (TLS), the successor to SSL, to secure data communications over a wireless network.

As used herein, the term "Unauthorized access" is when someone gains access to a website, program, server, service, or other system using someone else's account or other methods. For example, if someone kept guessing a password or username for an account that was not theirs until they gained access, it is considered unauthorized access.

As used herein, the term "IoT" stands for Internet of Things which describes the network of physical objects "things" or objects embedded with sensors, software, and other technologies for the purpose of connecting and exchanging data with other devices and systems over the internet.

As used herein "Machine learning " refers to algorithms that give a computer the ability to learn without explicit programming, including algorithms that learn from and make predictions about data. Machine learning techniques include, but are not limited to, support vector machine, artificial neural network (ANN) (also referred to herein as a "neural net"), deep learning neural network, logistic regression, discriminant analysis, random forest, linear regression, rules-based machine learning, Naive Bayes, nearest neighbor, decision tree, decision tree learning, and hidden Markov, etc. For the purposes of clarity, part of a machine learning process can use algorithms such as linear regression or logistic regression. However, using linear regression or another algorithm as part of a machine learning process is distinct from performing a statistical analysis such as regression with a spreadsheet program. The machine learning process can continually learn and adjust the classifier as new data becomes available and does not rely on explicit or rules-based programming. The ANN may be featured with a feedback loop to adjust the system output dynamically as it learns from the new data as it becomes available. In machine learning, backpropagation and feedback loops are used to train the AI/ML model improving the model's accuracy and performance over time.

Statistical modeling relies on finding relationships between variables (e.g., mathematical equations) to predict an outcome.

As used herein, the term "Data mining" is a process used to turn raw data into useful information.

As used herein, the term "Data acquisition" is the process of sampling signals that measure real world physical conditions and converting the resulting samples into digital numeric values that a computer manipulates. Data acquisition systems typically convert analog waveforms into digital values for processing. The components of data acquisition systems include sensors to convert physical parameters to electrical signals, signal conditioning circuitry to convert sensor signals into a form that can be converted to digital values, and analog-to-digital converters to convert conditioned sensor signals to digital values. Stand-alone data acquisition systems are often called data loggers.

As used herein, the term "Dashboard" is a type of interface that visualizes particular Key Performance Indicators (KPIs) for a specific goal or process. It is based on data visualization and infographics.

As used herein, a "Database" is a collection of organized information so that it can be easily accessed, managed, and updated. Computer databases typically contain aggregations of data records or files.

As used herein, the term "Data set" (or "Dataset") is a collection of data. In the case of tabular data, a data set corresponds to one or more database tables, where every column of a table represents a particular variable, and each row corresponds to a given record of the data set in question. The data set lists values for each of the variables, such as height and weight of an object, for each member of the data set. Each value is known as a datum. Data sets can also consist of a collection of documents or files.

As used herein, a "Sensor" is a device that measures physical input from its environment and converts it into data that is interpretable by either a human or a machine. Most sensors are electronic, which presents electronic data, but some are simpler, such as a glass thermometer, which presents visual data.

In an embodiment, sensors may be removably or fixedly installed within the vehicle and may be disposed in various arrangements to provide information to the autonomous operation features. Among the sensors may be included one or more of a GPS unit, a radar unit, a LIDAR unit, an ultrasonic sensor, an infrared sensor, an inductance sensor, a camera, an accelerometer, a tachometer, or a speedometer. Some of the sensors (e.g., radar, LIDAR, or camera units) may actively or passively scan the vehicle environment for obstacles (e.g., other vehicles, buildings, pedestrians, etc.), roadways, lane markings, signs, or signals. Other sensors (e.g., GPS, accelerometer, or tachometer units) may provide data for determining the location or movement of the vehicle (e.g., via GPS coordinates, dead reckoning, wireless signal triangulation, etc.).

The term "stadiometer" as used herein refers to a device for measuring height, with a vertical measuring board and a horizontal headboard. The device may be used for measuring an object height and vehicle height. The device consists of a vertical ruler with a sliding horizontal rod or paddle which is adjusted to rest on the top of the head. The device may be a portable device. The device may also be used to measure a height of a portion of the object.

The term "vehicle" as used herein refers to a thing used for transporting people or goods. Automobiles, cars, trucks, buses etc. are examples of vehicles.

The term "electronic control unit" (ECU), also known as an "electronic control module" (ECM), is usually a module that controls one or more subsystems. Herein, an ECU may be installed in a car or other motor vehicle. It may refer to many ECUs, and can include but not limited to, Engine Control Module (ECM), Powertrain Control Module (PCM), Transmission Control Module (TCM), Brake Control Module (BCM) or Electronic Brake Control Module (EBCM), Central Control Module (CCM), Central Timing Module (CTM), General Electronic Module (GEM), Body Control Module (BCM), and Suspension Control Module (SCM). ECUs together are sometimes referred to collectively as the vehicles' computer or vehicles' central computer and may include separate computers. In an example, the electronic control unit can be an embedded system in automotive electronics. In another example, the electronic control unit is wirelessly coupled with the automotive electronics.

The terms "non-transitory computer-readable medium" and "computer-readable medium" include a single medium or multiple media such as a centralized or distributed database, and/or associated caches and servers that store one or more sets of instructions. Further, the terms "non-transitory computer-readable medium" and "computer-readable medium" include any tangible medium that is capable of storing, encoding, or carrying a set of instructions for execution by a processor that, for example, when executed, cause a system to perform any one or more of the methods or operations disclosed herein. As used herein, the term "computer readable medium" is expressly defined to include any type of computer readable storage device and/or storage disk and to exclude propagating signals.

The term "Vehicle Data bus" as used herein represents the interface to the vehicle data bus (e.g., CAN, LIN, Ethernet/IP, FlexRay, and MOST) that may enable communication between the Vehicle on-board equipment (OBE) and other vehicle systems to support connected vehicle applications.

The term, "handshaking" refers to an exchange of predetermined signals between agents connected by a communications channel to assure each that it is connected to the other (and not to an imposter). This may also include the use of passwords and codes by an operator. Handshaking signals are transmitted back and forth over a communications network to establish a valid connection between two stations. A hardware handshake uses dedicated wires such as the request-to-send (RTS) and clear-to-send (CTS) lines in an RS-232 serial transmission. A software handshake sends codes such as "synchronize" (SYN) and "acknowledge" (ACK) in a TCP/IP transmission.

The term "infotainment system" or "in-vehicle infotainment system" (IVI) as used herein refers to a combination of vehicle systems which are used to deliver entertainment and information. In an example, the information may be delivered to the driver and the passengers of a vehicle/occupants through audio/ video interfaces, control elements like touch screen displays, button panel, voice commands, and more. Some of the main components of an in-vehicle infotainment systems are integrated head-unit, heads-up display, high-end Digital Signal Processors (DSPs), and Graphics Processing Units (GPUs) to support multiple displays, operating systems, Controller Area Network (CAN), Low-Voltage Differential Signaling (LVDS), and other network protocol support (as per the requirement), connectivity modules, automotive sensors integration, digital instrument cluster, etc.

The term "control module" as used herein refers to those parts of a digital computer that regulate the carrying out of instructions in proper sequence, the interpretation of each instruction, and the application of the proper signals to the arithmetic unit and other parts in accordance with this interpretation. The control unit or control module may be referring to an electronic control unit or a sub-system of the ECU and may be referring to a functional unit in an electronic control unit or a sub-system that controls one or more units of the vehicle's equipment.

The term "environment" or "surrounding" as used herein refers to surroundings and the space in which a vehicle is navigating. It refers to dynamic surroundings in which a vehicle is navigating which includes other vehicles, obstacles, pedestrians, lane boundaries, traffic signs and signals, speed limits, potholes, snow, water logging, etc.

The term "autonomous mode" as used herein refers to an operating mode which is independent and unsupervised.

The term "autonomous communication" as used herein comprises communication over a period with minimal supervision under different scenarios and is not solely or completely based on pre-coded scenarios or pre-coded rules or a predefined protocol. Autonomous communication, in general, happens in an independent and an unsupervised manner. In an embodiment, a communication module is enabled for autonomous communication.

The term "autonomous vehicle" also referred to as self-driving vehicle, driverless vehicle, robotic vehicle as used herein refers to a vehicle incorporating vehicular automation, that is, a ground vehicle that can sense its environment and move safely with little or no human input. Self-driving vehicles combine a variety of sensors to perceive their surroundings, such as thermographic cameras, Radio Detection and Ranging (radar), Light Detection and Ranging (lidar), Sound Navigation and Ranging (sonar), Global Positioning System (GPS), odometry and inertial measurement unit. Control systems, designed for the purpose, interpret sensor information to identify appropriate navigation paths, as well as obstacles and relevant signage.

The term "communication system" or "communication module" as used herein refers to a system which enables the information exchange between two points. The process of transmission and reception of information is called communication. The major elements of communication include but are not limited to a transmitter of information, channel or medium of communication and a receiver of information.

The term "connection" as used herein refers to a communication link. It refers to a communication channel that connects two or more devices for the purpose of data transmission. It may refer to a physical transmission medium such as a wire, or to a logical connection over a multiplexed medium such as a radio channel in telecommunications and computer networking. A channel is used for the information transfer of, for example, a digital bit stream, from one or several senders to one or several receivers. A channel has a certain capacity for transmitting information, often measured by its bandwidth in Hertz (Hz) or its data rate in bits per second. For example, a Vehicle-to-Vehicle (V2V) communication may wirelessly exchange information about the speed, location and heading of surrounding vehicles.

The term "communication" as used herein refers to the transmission of information and/or data from one point to another. Communication may be by means of electromagnetic waves. It is also a flow of information from one point, known as the source, to another, the receiver. Communication comprises one of the following: transmitting data, instructions, and information or a combination of data, instructions, and information. Communication happens between any two communication systems or communicating units. The term "in communication with" may refer to any coupling, connection, or interaction using electrical signals to exchange information or data, using any system, hardware, software, protocol, or format, regardless of whether the exchange occurs wirelessly or over a wired connection. The term communication includes systems that combine other more specific types of communication, such as V2I (Vehicle-to-Infrastructure), V2I (Vehicle-to-Infrastructure), V2N (Vehicle-to-Network), V2V (Vehicle-to-Vehicle), V2P (Vehicle-to-Pedestrian), V2D (Vehicle-to-Device) and V2G (Vehicle-to-Grid) and Vehicle-to-Everything (V2X) communication.

Further, the communication apparatus is configured on a computer with the communication function and is connected for bidirectional communication with the on-vehicle emergency report apparatus by a communication line through a radio station and a communication network such as a public telephone network or by satellite communication through a communication satellite. The communication apparatus is adapted to communicate, through the communication network, with communication terminals.

The term "vehicle to vehicle (V2V) communication" refers to the technology that allows vehicles to broadcast and receive messages. The messages may be omni-directional messages, creating a 360-degree "awareness" of other vehicles in proximity. Vehicles may be equipped with appropriate software (or safety applications or traffic condition detection) that can use the messages from surrounding vehicles to determine potential crash threats as they develop.

The term "protocol" as used herein refers to a procedure required to initiate and maintain communication; a formal set of conventions governing the format and relative timing of message exchange between two communications terminals; a set of conventions that govern the interaction of processes, devices, and other components within a system; a set of signaling rules used to convey information or commands between boards connected to the bus; a set of signaling rules used to convey information between agents; a set of semantic and syntactic rules that determine the behavior of entities that interact; a set of rules and formats (semantic and syntactic) that determines the communication behavior of simulation applications; a set of conventions or rules that govern the interactions of processes or applications within a computer system or network; a formal set of conventions governing the format and relative timing of message exchange in a computer system; a set of semantic and syntactic rules that determine the behavior of functional units in achieving meaningful communication; a set of semantic and syntactic rules for exchanging information.

The term "V2X communication" as used herein refers to transmission of information from a vehicle to any entity that may affect the vehicle, and vice versa. Depending on the underlying technology employed, there are two types of V2X communication technologies: cellular networks and other technologies that support direct device-to-device communication (such as Dedicated Short-Range Communication (DSRC), Port Community System (PCS), Bluetooth^{®}, Wi-Fi^{®}, etc.).

The term "communication protocol" as used herein refers to standardized communication between any two systems. An example communication protocol is a DSRC protocol. The DSRC protocol uses a specific frequency band (e.g., 5.9 GHz) and specific message formats (such as the Basic Safety Message, Signal Phase and Timing, and Roadside Alert ) to enable communications between vehicles and infrastructure components, such as traffic signals and roadside sensors. DSRC is a standardized protocol, and its specifications are maintained by various organizations, including the IEEE and SAE International.

The term "bidirectional communication" as used herein refers to an exchange of data between two components. In an example, the first component can be a vehicle and the second component can be an infrastructure that is enabled by a system of hardware, software, and firmware.

The term "alert" or "alert signal" refers to a communication to attract attention. An alert may include visual, tactile, audible alert, and a combination of these alerts to warn drivers or occupants. These alerts allow receivers, such as drivers or occupants, the ability to react and respond quickly.

The term "in communication with" as used herein, refers to any coupling, connection, or interaction using signals to exchange information, message, instruction, command, and/or data, using any system, hardware, software, protocol, or format regardless of whether the exchange occurs wirelessly or over a wired connection.

As used herein, the term "traffic light" refers to a light used to control the movement of traffic. Traffic lights may be placed at road intersections and crossings. Traffic lights consist normally of three signals, transmitting meaningful information to drivers and riders through colors and symbols including arrows and bicycles. The regular traffic light colors are red, yellow (also known as amber), and green arranged vertically or horizontally in that order. Although this is internationally standardized, variations exist on national and local scales as to traffic light sequences and laws.

As used herein, the term "electric drive unit" refers to a unit that can control the operation of various devices of the autonomous vehicle. The electric drive unit is responsible for enabling the mobility of the vehicle.

As used herein, the term "restriction obstacle" refers to an object blocking or getting in the way or route of a vehicle, or to prevent the vehicle from moving or progressing forward toward a destination point by causing difficulties (e.g., collision).

As used herein, the term "threshold clearance height" refers to a minimum clearance height needed at which the vehicles can move without collision. The threshold clearance height may also be the minimum clearance (e.g., gap) that the vehicles move under the restriction obstacles (e.g., underpass, bridge, tree, tunnel, roof structure, building, parking area, etc.). Below the threshold clearance, the vehicle with load or without load may collide with the restriction obstacles.

As used herein, the term "threshold clearance width" refers to a minimum clearance width needed at which the vehicles can move without collision. The threshold clearance width may also be the minimum clearance (e.g., gap) that the vehicles move under the restriction obstacles (e.g., underpass, bridge, tree, tunnel, roof structure, building, parking area, etc.). Below the threshold clearance, the vehicle with load or without load may collide with the restriction obstacles.

As used herein, the term "third party service" refers to any unaffiliated person, company, or entity that performs services for a company. Third-party service providers may be paid for their services, but do not have a stake, share, or equity in the company. Third-party service providers may also be free of cost for their services. Third-party services may also be web-based technologies that are not exclusively operated or controlled by a government entity or that involve significant participation of a non-government entity.

As used herein, the term "total height" refers to the height of the vehicle from the ground surface to the top of the vehicle with or without load at the roof top (e.g., luggage carrier). The total height refers to the sum of the height of the vehicle and the maximum height of the one or more loads. For example, consider the vehicle having one or more loads at the luggage carrier on the roof top. The height of the vehicle is 2.5 meters. The height of one load is 0.25 meters and the height of the other load is 0.50 meters. Then the total height of the vehicle is 2.5 + 0.5 (maximum height among the loads) = 3 meters. For another example, consider the vehicle without loads at the luggage carrier on the roof top. The height of the vehicle is 2.5 meters. Then the total height of the vehicle is 2.5 meters. The height of the vehicle includes the height of the luggage carrier (i.e., from the ground surface to the top of the luggage carrier).

As used herein, the term "safe passage" refers to passing of the vehicle through the restriction obstacle without collision. The vehicle along with the load do not make any contact to the surfaces of the restriction obstacles at all sides (e.g., top, bottom, sides, etc.). The safe passage further refers to passing of the vehicle through the restriction obstacle without any damages or even scratches to the vehicle and the one or more objects (e.g., loads) attached to the vehicle.

As used herein, the term "probability" refers to the possibility of the outcome of any random event. Probability can be defined as the ratio of the number of favorable outcomes to the total number of outcomes of an event. Probability further refers to the chances of occurrences of an event.

As used herein, the term "true" refers to an unknown actual probability that an event will occur in a given situation.

As used herein, the term "false" refers to an unknown actual probability that an event will not occur in a given situation.

As used herein, the term "real-time location" refers to a location of someone or something (e.g., vehicle, restriction obstacle, etc.) in real-time. The real-time location may be determined continually or when interrogated.

As used herein, the term "video analytics" refers to a practical solution for reviewing hours of video (e.g., surveillance video) to identify incidents that are pertinent to what you are looking for. Video analytics is adapted to automatically generate descriptions of what is actually happening in the video (so-called metadata), which can be used to list persons, cars and other objects detected in the video stream (e.g., intersection area, signal, crossings, traffic, congestion, obstruction, etc.), as well as their appearance and movements.

As used herein, the term "destination point" refers to a destination location of the vehicle.

The term "cyber security" as used herein refers to application of technologies, processes, and controls to protect systems, networks, programs, devices, and data from cyber-attacks.

The term "cyber security module" as used herein refers to a module comprising application of technologies, processes, and controls to protect systems, networks, programs, devices and data from cyber-attacks and threats. It aims to reduce the risk of cyber-attacks and protect against the unauthorized exploitation of systems, networks, and technologies. It includes, but is not limited to, critical infrastructure security, application security, network security, cloud security, Internet of Things (IoT) security.

The term "encrypt" used herein refers to securing digital data using one or more mathematical techniques, along with a password or "key" used to decrypt the information. It refers to converting information or data into a code, especially to prevent unauthorized access. It may also refer to concealing information or data by converting it into a code. It may also be referred to as cipher, code, encipher, encode. A simple example is representing alphabets with numbers - say, 'A' is '01', 'B' is `02', and so on. For example, a message like "HELLO" will be encrypted as "0805121215," and this value will be transmitted over the network to the recipient(s).

The term "decrypt" used herein refers to the process of converting an encrypted message back to its original format. It is generally a reverse process of encryption. It decodes the encrypted information so that only an authorized user can decrypt the data because decryption requires a secret key or password. This term could be used to describe a method of unencrypting the data manually or unencrypting the data using the proper codes or keys.

The term "cyber security threat" used herein refers to any possible malicious attack that seeks to unlawfully access data, disrupt digital operations, or damage information. A malicious act includes but is not limited to damaging data, stealing data, or disrupting digital life in general. Cyber threats include, but are not limited to, malware, spyware, phishing attacks, ransomware, zero-day exploits, trojans, advanced persistent threats, wiper attacks, data manipulation, data destruction, rogue software, malvertising, unpatched software, computer viruses, man-in-the-middle attacks, data breaches, Denial of Service (DoS) attacks, and other attack vectors.

The term "hash value" used herein can be thought of as fingerprints for files. The contents of a file are processed through a cryptographic algorithm, and a unique numerical value, the hash value, is produced that identifies the contents of the file. If the contents are modified in any way, the value of the hash will also change significantly. Example algorithms used to produce hash values: the Message Digest-5 (MD5) algorithm and Secure Hash Algorithm-1 (SHA1).

The term "integrity check" as used herein refers to the checking for accuracy and consistency of system related files, data, etc. It may be performed using checking tools that can detect whether any critical system files have been changed, thus enabling the system administrator to look for unauthorized alteration of the system. For example, data integrity corresponds to the quality of data in the databases and to the level by which users examine data quality, integrity, and reliability. Data integrity checks verify that the data in the database is accurate, and functions as expected within a given application.

The term "alarm" as used herein refers to a trigger when a component in a system or the system fails or does not perform as expected. The system may enter an alarm state when a certain event occurs. An alarm indication signal is a visual signal to indicate the alarm state. For example, when a cyber security threat is detected, a system administrator may be alerted via sound alarm, a message, a glowing LED, a pop-up window, etc. Alarm indication signal may be reported downstream from a detecting device, to prevent adverse situations or cascading effects.

The term "autonomous vehicle" also referred to as self-driving vehicle, driverless vehicle, robotic vehicle as used herein refers to a vehicle incorporating vehicular automation, that is, a ground vehicle that can sense its environment and move safely with little or no human input. Self-driving vehicles combine a variety of sensors to perceive their surroundings, such as thermographic cameras, Radio Detection and Ranging (radar), Light Detection and Ranging (lidar), Sound Navigation and Ranging (sonar), Global Positioning System (GPS), odometry and inertial measurement unit. Control systems, designed for the purpose, interpret sensor information to identify appropriate navigation paths, as well as obstacles and relevant signage.

As used herein the term "connection" as used herein refers to a communication link. It refers to a communication channel that connects two or more devices for the purpose of data transmission. It may refer to a physical transmission medium such as a wire, or to a logical connection over a multiplexed medium such as a radio channel in telecommunications and computer networking. A channel is used for information transfer of, for example a digital bit stream, from one or several senders to one or several receivers. A channel has a certain capacity for transmitting information, often measured by its bandwidth in Hertz (Hz) or its data rate in bits per second. For example, a Vehicle-to-Vehicle (V2V) communication may wirelessly exchange information about the speed, location and heading of surrounding vehicles.

As used herein, the term "communication" refers to the transmission of information and/or data from one point to another. Communication may be by means of electromagnetic waves. It is also a flow of information from one point, known as the source, to another, the receiver. Communication comprises one of the following: transmitting data, instructions, and information or a combination of data, instructions, and information. Communication happens between any two communication systems or communicating units.

The term "in communication with" may refer to any coupling, connection, or interaction using electrical signals to exchange information or data, using any system, hardware, software, protocol, or format, regardless of whether the exchange occurs wirelessly or over a wired connection. The term communication includes systems that combine other more-specific types of communication, such as V2I (Vehicle-to-Infrastructure), V2I (Vehicle-to-Infrastructure), V2N (Vehicle-to-Network), V2V (Vehicle-to-Vehicle), V2P (Vehicle-to-Pedestrian), V2D (Vehicle-to-Device) and V2G (Vehicle-to-Grid) and Vehicle-to-Everything (V2X) communication. V2X communication is the transmission of information from a vehicle to any entity that may affect the vehicle, and vice versa. The main motivations for developing V2X are occupant safety, road safety, traffic efficiency and energy efficiency. Depending on the underlying technology employed, there are two types of V2X communication technologies: cellular networks and other technologies that support direct device-to-device communication (such as Dedicated Short-Range Communication (DSRC), Port Community System (PCS), Bluetooth^{®}, Wi-Fi^{®}, etc.).

As used herein, the term "vehicle to vehicle (V2V) communication" refers to the technology that allows vehicles to broadcast and receive messages. The messages may be omni-directional messages, creating a 360-degree "awareness" of other vehicles in proximity. Vehicles may be equipped with appropriate software (or safety applications) that can use the messages from surrounding vehicles to determine potential crash threats as they develop.

The term "protocol" as used herein refers to a procedure required to initiate and maintain communication; a formal set of conventions governing the format and relative timing of message exchange between two communications terminals; a set of conventions that govern the interaction of processes, devices, and other components within a system; a set of signaling rules used to convey information or commands between boards connected to the bus; a set of signaling rules used to convey information between agents; a set of semantic and syntactic rules that determine the behavior of entities that interact; a set of rules and formats (semantic and syntactic) that determines the communication behavior of simulation applications; a set of conventions or rules that govern the interactions of processes or applications within a computer system or network; a formal set of conventions governing the format and relative timing of message exchange in a computer system; a set of semantic and syntactic rules that determine the behavior of functional units in achieving meaningful communication; a set of semantic and syntactic rules for exchanging information.

The term "communication protocol" as used herein refers to standardized communication between any two systems. An example of a communication protocol is Health Level Seven (HL7). HL7 is a set of international standards used to provide guidance with transferring and sharing data between various healthcare providers. HL7 is a comprehensive framework for the exchange, integration, sharing, and retrieval of health information.

The term "bidirectional communication" as used herein refers to an exchange of data between two components. In an example, the first component can be a vehicle and the second component can be an infrastructure that is enabled by a system of hardware, software, and firmware. This communication is typically wireless.

The term "nearby vehicle" as used herein refers to surrounding vehicles of the user's vehicle and is within reach or beyond reach of at least a communication range of the user's vehicle, wherein the communication range is defined as the maximum distance where communication can exist between two antennas, one of which is user's vehicle antenna in a wireless network. In an embodiment, "nearby vehicle" is written as a surrounding vehicle, trailing vehicle, or leading vehicle. The nearby vehicle may also include vehicles from nearby lanes, opposite lanes, or adjacent lanes.

The term "maneuver" as used herein refers to carefully moving, steering, or driving a vehicle, in order to move from one point to another point.

The term "autobrake" as used herein refers to an advanced system, specifically designed to either prevent possible collision, or reduce speed of the moving vehicle, prior to a collision with another vehicle, pedestrian, or a restriction obstacle of some sort. The vehicle may comprise an auto braking unit receiving commands from an electric drive unit or from a control module.

As used herein, the term "probability" denotes the possibility of the outcome of any random event (e.g., safe passage of the vehicle through the restriction obstacle without collision, etc.). The meaning of this term is to check the extent to which any event is likely to happen. The term probability can also be defined as the ratio of the number of favorable outcomes to the total number of outcomes of an event. Probability further refers to the chances of occurrences of an event.

As used herein, the term "height warning module" is usually a module that controls one or more subsystems. Herein, the height warning module may be installed in a vehicle, nearby vehicle, a restriction obstacle, or any other external infrastructure. In an example, the height warning module can be an embedded system in automotive electronics. In another example, the height warning module is wirelessly coupled with the automotive electronics. The height warning module may communicate with the vehicle and provide assistance to the vehicle. The vehicle can be a manual driven vehicle, a self-driving vehicle, or an autonomous vehicle. In case of the manual driven vehicle, the height warning module communicates to the vehicle and displays instructions or alerts or warnings, or suggestions to the driver by displaying them on the dashboard. In the case of the self-driving vehicle or the autonomous vehicle, the height warning module communicates commands to the electric drive unit and/or control module of the vehicle to maneuver the vehicle according to the commands from the height warning module. The height warning module may provide commands like braking instructions (e.g., autobrake, braking distance, etc.), maneuvering commands (e.g., maneuvering under the restriction obstacle at a place having maximum clearance, etc.), green signal to pass through the restriction obstacle, red signal to stop before the restriction obstacle, and yellow signal to maneuver carefully (according to the commands provided by the heigh warning module, or autonomously) under the restriction obstacle. The height warning module works in conjunction with the width warning module.

As used herein, the term "width warning module" is usually a module that controls one or more subsystems. Herein, the width warning module may be installed in a vehicle, nearby vehicle, a restriction obstacle, or any other external infrastructure. In an example, the width warning module can be an embedded system in automotive electronics. In another example, the width warning module is wirelessly coupled with the automotive electronics. The width warning module may communicate with the vehicle and provide assistance to the vehicle. The vehicle can be a manual driven vehicle, a self-driving vehicle, or an autonomous vehicle. In case of the manual driven vehicle, the width warning module communicates to the vehicle and displays instructions or alerts or warnings, or suggestions to the driver by displaying them on the dashboard. In the case of the self-driving vehicle or the autonomous vehicle, the width warning module communicates commands to the electric drive unit and/or control module of the vehicle to maneuver the vehicle according to the commands from the width warning module. The width warning module may provide commands like braking instructions (e.g., autobrake, braking distance, etc.), maneuvering commands (e.g., maneuvering under the restriction obstacle at a place having maximum clearance width, etc.), green signal to pass through the restriction obstacle, red signal to stop before the restriction obstacle, and yellow signal to maneuver carefully (according to the commands provided by the heigh warning module, or autonomously) through the restriction obstacle without collision and without any damages or even scratches to the vehicle and or the one or more objects (e.g., load, packages, etc.) attached on to the top. The width warning module works in conjunction with the height warning module.

As used herein, the term, "travel route" refers to a path or route on which the vehicle travels or about to travel to reach the destination point. The travel route may have restriction obstacles along its path which may provide hindrance to the vehicle.

As used herein, the term "height restriction information" refers to the information regarding height of the restriction obstacles. The height restriction information may comprise height between the ground surface and the surface of restriction obstacle, clearance height between the vehicle (along with load or without load) and the surface of restriction obstacles.

As used herein, the term "width restriction information" refers to the information regarding width of the restriction obstacles. The width restriction information may comprise width between the vehicle side and the sides of restriction obstacle, clearance width between the vehicle (along with load or without load) and the sides of restriction obstacles.

As used herein, the term "clearance height" refers to a minimum gap required between the vehicle (along with load or without load) and the surface of restriction obstacles. The minimum gap is required to enable the vehicle (along with load or without load) to pass through the restriction obstacles without collision or damages and scratches.

As used herein, the term "clearance width" refers to a minimum gap required between the vehicle (along with load or without load) and the sides of restriction obstacles. The minimum gap is required to enable the vehicle (along with load or without load) to pass through the restriction obstacles without collision or damages and scratches.

As used herein, the term "object" refers to a load attached to the vehicle either at the top or at the sides. In one embodiment, the load is attached to the top of the vehicle (e.g., vertical direction) at the luggage carrier. In another embodiment, the load is attached to the sides (e.g., horizontal direction) of the vehicle at the luggage carrier.

As used herein, the term "external infrastructure" refers to any external object, building, bridge, frame, construction, tree, etc. that is residing outside of the vehicle and the restriction obstacle. The external infrastructure may be in the field of view of the vehicle and/or the restriction obstacles.

As used herein, the term "command" refers to an order to be followed. The order may be given in an official way.

As used herein, the term "natural language processing (NLP)" refers to a machine learning technology that gives computers the ability to interpret, manipulate, and comprehend human language. The natural language processing is adapted to understand the context of the written, pictorial representation, text, speech, or other form of contents. NLP combines computational linguistics, a rule-based modeling of human language, with statistical, machine learning, and deep learning models. NLP drives computer programs that translate text from one language to another, respond to spoken commands, and summarize large volumes of text rapidly-even in real time.

As used herein, the term "artificial intelligence (AI)" refers to intelligence of perceiving, synthesizing, and inferring information demonstrated by machines, as opposed to intelligence displayed by humans or by other animals. Artificial intelligence combines reliable datasets and computer technology to enable problem solving by analyzing, interpreting, understanding the pattern, learning, and making decisions accordingly. Artificial intelligence may be used to train the system further from the previous datasets and update dynamically in decision making and providing outputs in subsequent iterations of learning.

As used herein, the term "adjustable roof rack" refers to a roof rack (e.g., luggage carrier) attached to the vehicle that can be adjusted to raise or lower the total height of the vehicle. In one embodiment, the adjustable roof rack is an automatically adjustable roof rack. The adjustable roof rack receives commands from the control module, the height warning module and/or the artificial intelligence module and adjusts automatically according to the commands. The adjustable roof rack is capable of automatically adjusting the height with load or without loads. The adjustable roof rack may be mechanically operated. The adjustable roof rack may be electronically operated. The adjustable roof rack may be vacuum operated. The adjustable roof rack can be adjusted to predefined heights at different predefined levels. In one embodiment, the adjustable roof rack can be adjusted to customized heights between different predefined levels by activating electromagnetic springs. In another embodiment, the adjustable roof rack may dynamically adjust in real-time.

As used herein, the term "alternate route" refers to one or more different routes that lead to the same destination point. The alternate routes may provide less hindrance to the vehicles passing through and reaching the destination point with or without load.

As used herein, the term "total width" refers to the width of the vehicle with or without load. The total width refers to the sum of the width of the vehicle and the maximum width of the one or more loads. For example, consider the vehicle having one or more loads. The width of the vehicle is 2.5 meters. The width of one load is 0.25 meters and the width of the other load is 0.50 meters. Then the total width of the vehicle is 2.5 + 0.5 (maximum height among the loads) = 3 meters. The width is taken into account on both sides of the vehicle. For another example, consider the vehicle without loads. The width of the vehicle is 2.5 meters. Then the total width of the vehicle is 2.5 meters. The width of the vehicle includes any exterior protrusions (e.g., side mirrors, etc.) that are out of the vehicle.

As used herein, the term "component" broadly construes hardware, firmware, and/or a combination of hardware, firmware, and software.

The embodiments described herein can be directed to one or more of a system, a method, an apparatus, and/or a computer program product at any possible technical detail level of integration. The computer program product can include a computer readable storage medium (or media) having computer readable program instructions thereon for causing a processor to carry out aspects of the one or more embodiments described herein. The computer readable storage medium can be a tangible device that can retain and store instructions for use by an instruction execution device. For example, the computer readable storage medium can be, but is not limited to, an electronic storage device, a magnetic storage device, an optical storage device, an electromagnetic storage device, a superconducting storage device, and/or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon and/or any suitable combination of the foregoing. A computer readable storage medium, as used herein, does not construe transitory signals per se, such as radio waves and/or other freely propagating electromagnetic waves, electromagnetic waves propagating through a waveguide and/or other transmission media (e.g., light pulses passing through a fiber-optic cable), and/or electrical signals transmitted through a wire.

Computer readable program instructions described herein are downloadable to respective computing/processing devices from a computer readable storage medium and/or to an external computer or external storage device via a network, for example, the Internet, a local area network, a wide area network and/or a wireless network. The network can comprise copper transmission cables, optical transmission fibers, wireless transmission, routers, firewalls, switches, gateway computers, and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the one or more embodiments described herein can be assembler instructions, instruction-set-architecture (ISA) instructions, machine instructions, machine dependent instructions, microcode, firmware instructions, state-setting data, configuration data for integrated circuitry, and/or source code and/or object code written in any combination of one or more programming languages, including an object oriented programming language such as Smalltalk, C++ or the like, and/or procedural programming languages, such as the "C" programming language and/or similar programming languages. The computer readable program instructions can execute entirely on a computer, partly on a computer, as a stand-alone software package, partly on a computer and/or partly on a remote computer or entirely on the remote computer and/or server. In the latter scenario, the remote computer can be connected to a computer through any type of network, including a local area network (LAN) and/or a wide area network (WAN), and/or the connection can be made to an external computer (for example, through the Internet using an Internet Service Provider). In one or more embodiments, electronic circuitry including, for example, programmable logic circuitry, field-programmable gate arrays (FPGA), and/or programmable logic arrays (PLA) can execute the computer readable program instructions by utilizing state information of the computer readable program instructions to personalize the electronic circuitry, in order to perform aspects of the one or more embodiments described herein.

Aspects of the one or more embodiments described herein are described with reference to flowchart illustrations and/or block diagrams of methods, apparatus (systems), and computer program products according to one or more embodiments described herein. Each block of the flowchart illustrations and/or block diagrams, and combinations of blocks in the flowchart illustrations and/or block diagrams, can be implemented by computer readable program instructions. These computer readable program instructions can be provided to a processor of a general purpose computer, special purpose computer and/or other programmable data processing apparatus to produce a machine, such that the instructions, which execute via the processor of the computer or other programmable data processing apparatus, can create means for implementing the functions/acts specified in the flowchart and/or block diagram block or blocks. These computer readable program instructions can also be stored in a computer readable storage medium that can direct a computer, a programmable data processing apparatus and/or other devices to function in a particular manner, such that the computer readable storage medium having instructions stored therein can comprise an article of manufacture including instructions which can implement aspects of the function/act specified in the flowchart and/or block diagram block or blocks. The computer readable program instructions can also be loaded onto a computer, other programmable data processing apparatus and/or other device to cause a series of operational acts to be performed on the computer, other programmable apparatus and/or other device to produce a computer implemented process, such that the instructions which execute on the computer, other programmable apparatus and/or other device implement the functions/acts specified in the flowchart and/or block diagram block or blocks.

The flowcharts and block diagrams in the figures illustrate the architecture, functionality and/or operation of possible implementations of systems, computer-implementable methods and/or computer program products according to one or more embodiments described herein. In this regard, each block in the flowchart or block diagrams can represent a module, segment and/or portion of instructions, which comprises one or more executable instructions for implementing the specified logical function(s). In one or more alternative implementations, the functions noted in the blocks can occur out of the order noted in the Figures. For example, two blocks shown in succession can be executed substantially concurrently, and/or the blocks can sometimes be executed in the reverse order, depending upon the functionality involved. It will also be noted that each block of the block diagrams and/or flowchart illustration, and/or combinations of blocks in the block diagrams and/or flowchart illustration, can be implemented by special purpose hardware-based systems that can perform the specified functions and/or acts and/or carry out one or more combinations of special purpose hardware and/or computer instructions.

While the subject matter described herein is in the general context of computer-executable instructions of a computer program product that runs on a computer and/or computers, those skilled in the art will recognize that the one or more embodiments herein also can be implemented in combination with one or more other program modules. Program modules include routines, programs, components, data structures, and/or the like that perform particular tasks and/or implement particular abstract data types. Moreover, other computer system configurations, including single-processor and/or multiprocessor computer systems, mini-computing devices, mainframe computers, as well as computers, hand-held computing devices (e.g., PDA, phone), microprocessor-based or programmable consumer and/or industrial electronics and/or the like can practice the herein described computer-implemented methods. Distributed computing environments, in which remote processing devices linked through a communications network perform tasks, can also practice the illustrated aspects. However, stand-alone computers can practice one or more, if not all aspects of the one or more embodiments described herein. In a distributed computing environment, program modules can be located in both local and remote memory storage devices.

As used in this application, the terms "component," "system," "platform," "interface," and/or the like, can refer to and/or can include a computer-related entity or an entity related to an operational machine with one or more specific functionalities. The entities described herein can be either hardware, a combination of hardware and software, software, or software in execution. For example, a component can be, but is not limited to being, a process running on a processor, a processor, an object, an executable, a thread of execution, a program and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system and/or across a network such as the Internet with other systems via the signal). As another example, a component can be an apparatus with specific functionality provided by mechanical parts operated by electric or electronic circuitry, which is operated by a software and/or firmware application executed by a processor. In such a case, the processor can be internal and/or external to the apparatus and can execute at least a part of the software and/or firmware application. As yet another example, a component can be an apparatus that provides specific functionality through electronic components without mechanical parts, where the electronic components can include a processor and/or other means to execute software and/or firmware that confers at least in part the functionality of the electronic components. In an aspect, a component can emulate an electronic component via a virtual machine, e.g., within a cloud computing system.

As it is employed in the subject specification, the term "processor" can refer to any computing processing unit and/or device comprising, but not limited to, single-core processors; single-processors with software multi-thread execution capability; multi-core processors; multi-core processors with software multi-thread execution capability; multi-core processors with hardware multi-thread technology; parallel platforms; and/or parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, and/or any combination thereof designed to perform the functions described herein. Further, processors can exploit nano-scale architectures such as, but not limited to, molecular based transistors, switches and/or gates, in order to optimize space usage and/or to enhance performance of related equipment. A combination of computing processing units can implement a processor.

Herein, terms such as "store," "storage," "data store," data storage," "database," and any other information storage component relevant to operation and functionality of a component refer to "memory components," entities embodied in a "memory," or components comprising a memory. Memory and/or memory components described herein can be either volatile memory or nonvolatile memory or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, and/or nonvolatile random access memory (RAM) (e.g., ferroelectric RAM (FeRAM). Volatile memory can include RAM, which can function as external cache memory, for example. By way of illustration and not limitation, RAM can be available in many forms such as synchronous RAM (SRAM), dynamic RAM (DRAM), synchronous DRAM (SDRAM), double data rate SDRAM (DDR SDRAM), enhanced SDRAM (ESDRAM), Synch link DRAM (SLDRAM), direct Rambus RAM (DRRAM), direct Rambus dynamic RAM (DRDRAM) and/or Rambus dynamic RAM (RDRAM). Additionally, the described memory components of systems and/or computer-implemented methods herein include, without being limited to including, these and/or any other suitable types of memory.

The embodiments described herein include mere examples of systems and computer-implemented methods. It is, of course, not possible to describe every conceivable combination of components and/or computer-implemented methods for purposes of describing the one or more embodiments, but one of ordinary skill in the art can recognize that many further combinations and/or permutations of the one or more embodiments are possible. Furthermore, to the extent that the terms "includes," "has," "possesses," and the like are used in the detailed description, claims, appendices and/or drawings such terms are intended to be inclusive in a manner similar to the term "comprising" as "comprising" is interpreted when employed as a transitional word in a claim.

The descriptions of the one or more embodiments are for purposes of illustration but are not exhaustive or limiting to the embodiments described herein. Many modifications and variations will be apparent to those of ordinary skill in the art without departing from the scope and spirit of the described embodiments. The terminology used herein best explains the principles of the embodiments, the practical application and/or technical improvement over technologies found in the marketplace, and/or to enable others of ordinary skill in the art to understand the embodiments described herein.

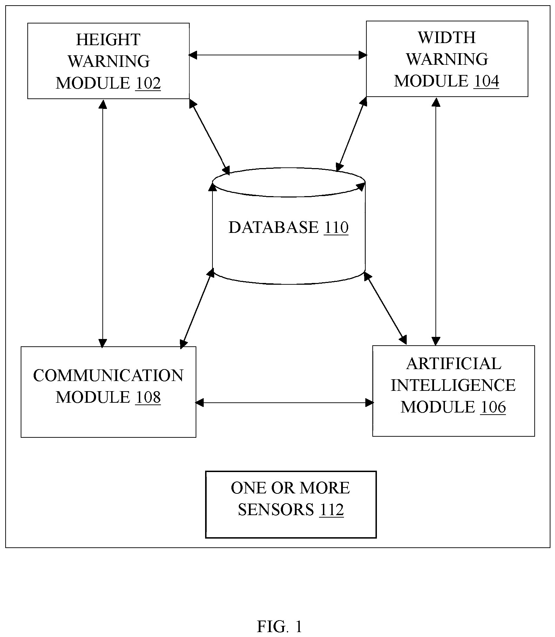

In an aspect, a system is described. FIG. 1 illustrates a system, according to one or more embodiments. The system comprises a height warning module 102. The system further comprises a width warning module 104. The height warning module 102 is configured to determine the total height of the vehicle and compute whether the vehicle safely passes through the restriction obstacle. The width warning module 104 is configured to determine the total width of the vehicle and compute whether the vehicle safely passes through the restriction obstacle. The height warning module 102 and the width warning module 104 aid the vehicles and/or drivers of the vehicles to safely pass through when approaching the restriction obstacles.

The height warning module 102 is configured to: detect one or more objects attached to a vehicle; determine a total height of the vehicle; obtain a first travel route of the vehicle to reach a destination point; extract first height restriction information of one or more first restriction obstacles located along the first travel route; determine a first clearance height based on the total height of the vehicle and the first height restriction information of the one or more first restriction obstacles; and compute a first probability of safe passage of the vehicle, along with the one or more objects through the one or more first restriction obstacles, as true when the first clearance height is greater than a threshold clearance. The total height of the vehicle comprises a first height of the vehicle and a second height of the one or more objects. The second height of the one or more objects may comprise a maximum height among the one or more objects.

In another embodiment, the system comprises a width warning module 104 that operates in tandem with the height warning module. The width warning module 104 is configured to: detect the one or more objects attached to the vehicle; determine a total width of the vehicle; obtain the first travel route of the vehicle to reach the destination point; extract first width restriction information of the one or more first restriction obstacles located along the first travel route; determine a first clearance width based on the total width of the vehicle and the first height restriction information of the one or more first restriction obstacles; and compute a second probability of the safe passage of the vehicle, along with the one or more objects through the one or more first restriction obstacles, as true when the first clearance width is greater than a threshold clearance width. The total width of the vehicle comprises a first width of the vehicle and a second width of the one or more objects. The width warning module 104 may communicate a command to an electric drive unit of the vehicle through a communication module upon computing the second probability of the safe passage of the vehicle, along with the one or more objects through the one or more first restriction obstacles, as false. In one embodiment, the command instructs the electric drive unit to apply autobrake to stop at a predefined distance prior to the one or more first restriction obstacles.

In another embodiment, the system comprises an artificial intelligence module 106. The artificial intelligence module 106 is pretrained using a first dataset comprising one or more traffic signs, one or more messages, one or more indications, one or more texts, one or more images, and one or more videos to recognize, interpret, and understand one or more contexts. In another embodiment, the artificial intelligence module 106 understands the one or more contexts and communicates a command to an electric drive unit. In another embodiment, the artificial intelligence module 106 is trained using a second dataset to learn, improve and understand the one or more contexts in an optimized way. The command instructs at least one of the electric drive unit and a control module to perform a predefined action upon reaching the one or more first restriction obstacles. In another embodiment, the predefined action comprises at least one of apply an autobrake, pass through the one or more first restriction obstacles, stop before the one or more first restriction obstacles, take a second travel route, and adjust a roof rack.

In another embodiment, the system further comprises a communication module 108. The communication module 108 is configured to establish wireless communication with at least one of the vehicles, the one or more first restriction obstacles, an external infrastructure, and one or more nearby vehicles. The system communicates a command to an electric drive unit of the vehicle through the communication module. In an embodiment, the system communicates the command upon computing the first probability of the safe passage of the vehicle along with the one or more objects through the one or more first restriction obstacles as false. In one embodiment, the command instructs the electric drive unit to apply autobrake to stop at a predefined distance prior to the one or more first restriction obstacles.

In another embodiment, the system comprises one or more sensors 112. The one or more sensors 112 comprises a laser sensor, a stadiometer, a distance sensor, a camera, a photoelectric sensor, a measurement sensor, and an ultrasonic sensor. In one embodiment, the camera captures at least one of an image and a video of the vehicle which may hold the one or more objects attached to the vehicle. The one or more sensors 112 may be configured to determine a distance between the vehicle and the one or more first restriction obstacles. In another embodiment, the one or more sensors is configured to determine the total height of the vehicle. In another embodiment, the one or more sensors 112 is configured to determine a distance between the vehicle and one or more nearby vehicles. In another embodiment, the one or more sensors 112 is configured to determine a distance between the vehicle and an external infrastructure. The system further comprises a database 110 that stores the data for future uses. The database 110 stores the datasets for training the artificial intelligence module 106.

In an embodiment, the system is part of the one or more first restriction obstacles along the first travel route. In another embodiment, the system is part of the vehicle. In another embodiment, the system is part of the one or more nearby vehicles. In another embodiment, the system is part of an external infrastructure. In another embodiment, the system is portable and can be part of any structure in the field of view of the vehicle and the restriction obstacle. In another embodiment, the system communicates with the vehicle. In another embodiment, the system communicates with one or more nearby vehicles.

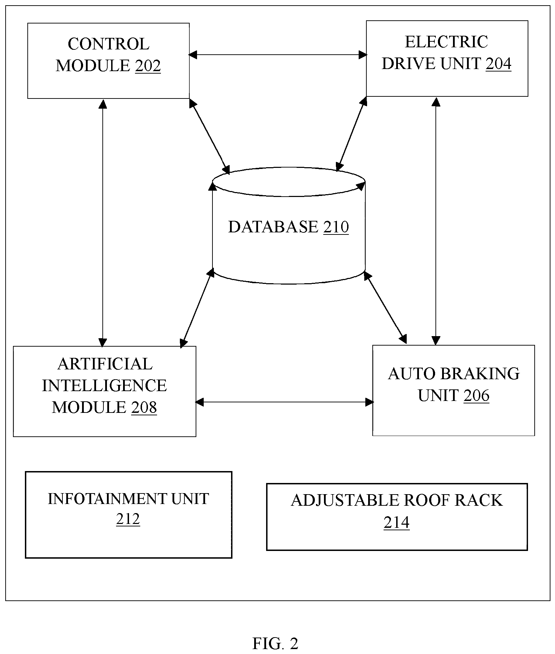

**FIG.** 2 illustrates components of a vehicle, according to one or more embodiments. The vehicle comprises a control module 202, an electric drive unit 204, an auto braking unit 206, and an artificial intelligence module 208. The control module 202 comprises a natural language processing module. The control module 202 provides commands to the electric drive unit. The electric drive unit 204 also receives commands directly from the artificial intelligence module 208. In one embodiment, the electric drive unit 204 receives commands from the control module 202 via the artificial intelligence module 208. The electric drive unit 204 then automatically maneuvers the vehicle according to the commands received, in cases of the autonomous vehicle. In one embodiment, the electric drive unit 204 then provides assistance to the drivers to maneuver the vehicle via the commands, in cases of the manual driven vehicle. The commands to the driver may be provided in the form of an audio, a text, a video, a pictorial representation (e.g., navigation map). The driver may follow the instructions for the safe passage of the vehicle.

The system, comprising the height warning module and the width warning module, may be part of the restriction obstacle. The system, in this case, may provide instructions/commands via a display and/or a speaker in the form of at least one of an audio, video, text, and a pictorial format upon the vehicle approaching the restriction obstacle. The artificial intelligence module 208 within the vehicle is configured to understand the instructions and provide commands to the electric drive unit. The artificial intelligence module 208 is pretrained with robust datasets to understand, learn and take decisions in order to provide commands to the electric drive unit in real-time. The artificial intelligence module 208 is trained with subsequent datasets to improve further with respect to the scenario to understand, learn and take decisions promptly in real-time. The dataset comprises one or more traffic signs, one or more messages, one or more indications, one or more texts, one or more images, and one or more videos. The dataset may also comprise predefined action taken with respect to the situation and scenario.

The natural language processing module analyzes the instructions/commands and understands the one or more contexts associated with the instructions/commands or suggestions provided. The natural language processing module recognizes, interprets, and analyzes one or more contexts of at least one of a message, an audio, an indication, a traffic sign, a text, and an image through an artificial intelligence provided by the system associated with the restriction obstacle. The natural language processing module, upon understanding the one or more contexts, provides commands to the electric drive unit. The electric drive unit 204 then takes predefined action. The predefined action comprises at least one of applying an autobrake, passing through the one or more first restriction obstacles, stopping before the one or more first restriction obstacles, taking a second travel route, and adjusting a roof rack.

The vehicle further comprises an infotainment unit. The control module 202 provides a user interface via the infotainment unit 212 through which the system accepts the total height of the vehicle from a user as an input. The control module 202 communicates the total height to the height warning module and the width warning module. In one embodiment, the user may provide the inputs as the vehicle type and model and the load type and model. The control module 202 retrieves the actual height of the vehicle based on the specification of the vehicle (from a third party database, e.g., vehicle database). In another embodiment, the control module 202 retrieves the actual height of the loads based on the specification of the loads (from a third party database). The control module 202 then determines the total height of the vehicle.

The vehicle also comprises an adjustable roof rack 214 that holds the one or more objects (e.g., loads). In one embodiment, the vehicle comprises a control module 202 that instructs the adjustable roof rack 214 to dynamically adjust in order to lower the total height of the vehicle. In another embodiment, the adjustable roof rack 214 is configured to adjust to one of a first level, a second level, and a third level. The first level comprises a first predefined height. The second level comprises a second predefined height. The third level comprises a third predefined height. In another embodiment, the adjustable roof rack 214 is configured to adjust to a customized height to adjust the total height of the vehicle.

The adjustable roof rack 214 is attached to the vehicle. The adjustable roof rack 214 can be adjusted manually to raise or lower the total height of the vehicle. In one embodiment, the adjustable roof rack 214 is an automatically adjustable roof rack 214. The adjustable roof rack 214 receives commands from the control module 202, the height warning module and/or the artificial intelligence module and adjusts automatically according to the commands. The adjustable roof rack 214 is capable of automatically adjusting the height with load or without loads. The adjustable roof rack 214 may be mechanically operated. The adjustable roof rack 214 may be electronically operated. The adjustable roof rack 214 may be vacuum operated. The adjustable roof rack 214 can be adjusted to predefined heights at different predefined levels. In one embodiment, the adjustable roof rack 214 can be adjusted to customized heights between different predefined levels by activating electromagnetic springs. In another embodiment, the adjustable roof rack 214 may dynamically adjust in real-time.

The adjustable roof rack 214 receives commands from the artificial intelligence module 208 and adjusts automatically according to the commands. The artificial intelligence module 208 is pretrained using a first dataset comprising vehicle information, vehicle specification, predefined height information of the one or more objects, travel route information, height restriction information of the one or more first restriction obstacles, and height information of the adjustable roof rack. The artificial intelligence module 208 may be trained using a second dataset to learn and improve. The artificial intelligence module 208 communicates a command to the adjustable roof rack via the control module. The command instructs the adjustable roof rack to automatically adjust to one of a first level, a second level, and a third level. The vehicle further comprises a database 210 that stores the data for future uses. The database 210 stores the datasets internally for training the artificial intelligence module 106 and the natural language processing module.

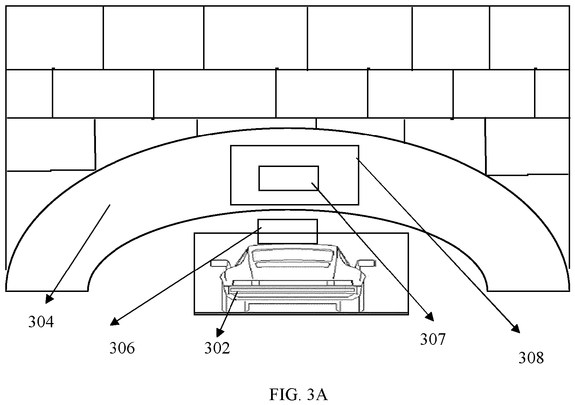

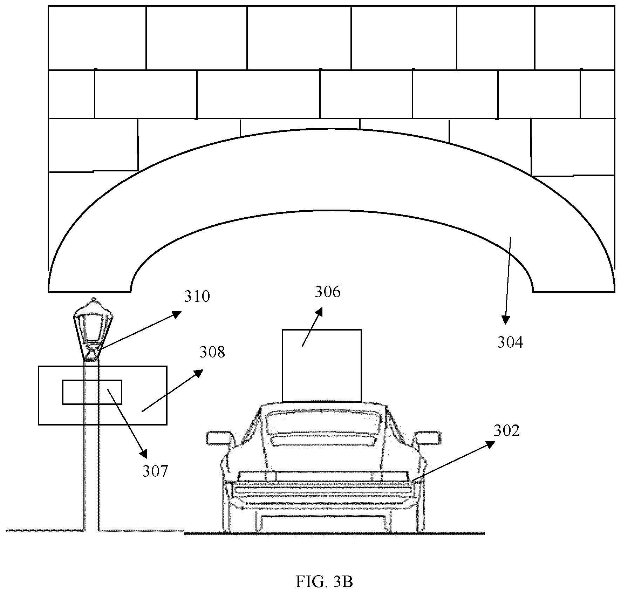

**FIG. 3A****, and** **3B** illustrate a vehicle approaching the restriction obstacle, according to one or more embodiments. The vehicle 302 may be of any model having a predefined height. The vehicle 302 may be any type of vehicle like cars, vans, buses, personal vehicles, taxis, etc. The vehicle 302 may also be a self-driving vehicle or an autonomous vehicle. The vehicle 302 may also be a manual driven vehicle. The vehicle 302 approaching the restriction obstacle 304 may carry one or more objects (e.g., loads) 306. The one or more objects 306 may be one or more loads (e.g., bicycles, luggage, packages, cargo box, etc.). The one or more objects 306 may be attached to the vehicle at the roof top or the roof rack (e.g., luggage carrier). The height of the vehicle 302 includes the height of the roof rack (e.g., luggage carrier). In one embodiment, the luggage carrier may be an adjustable luggage carrier such that the height and width of the luggage carrier can be adjusted. The vehicle 302 comprises a control module that can automatically adjust the height of the luggage carrier which in turn adjusts the total height of the vehicle from the ground surface. The total height of the vehicle 302 is equal to the sum of the height of the vehicle 302 and the height of the one or more objects carried by the vehicle 302. The restriction obstacle 304 may be, for example, an underpass, bridge, tree, tunnel, roof structure, building, parking area, etc.

The vehicle 302 (e.g., autonomous vehicle) may not be aware of the dimensions of the loads or objects attached. Usually, the load is held by the vehicle at the roof rack. As the vehicle 302 (e.g., autonomous vehicle) is unaware of the fact of the loads affixed, there may be a possibility of collision onto the restriction obstacle leading to damages to the vehicle and/or the objects attached to the vehicle. The vehicle 302 comprises the height warning module that provides assistance to enable safe passage of the vehicles through the restriction obstacles without collision. The vehicle 302 may also comprise the width warning module that provides assistance to enable safe passage of the vehicles through the restriction obstacles without collision. The height warning module works in conjunction with the width warning module. In one embodiment, the width warning module works in conjunction with the height warning module. The height warning module and the width warning module monitor the width and height of the vehicle 302 along with the loads and compares this data with the dimensions of the restriction obstacles to estimate the clearance gap (e.g., clearance width and clearance height). The height warning module computes the probability of safe passage of the vehicle through the restriction obstacle. Similarly, the width warning module computes the probability of safe passage of the vehicle through the restriction obstacle. In one embodiment, the system as a whole, comprising the height warning module and the width warning module, determines the probability of safe passage of the vehicle through the restriction obstacle 304 both height wise and width wise. The system then communicates a command or an alert or warning to the vehicle.

In one embodiment, the system is part of the one or more restriction obstacles 304 (as shown in FIG. 3A). The one or more restriction obstacles 304 comprises a display 307 within the system 308 that displays a message to the vehicle. The message may comprise a traffic sign. In another embodiment, the vehicle 302 comprises a control module. The control module comprises a natural language processing module configured to recognize, interpret, and understand at least one of a message, an audio, an indication, a traffic sign, a text, and an image. In one embodiment, the natural language processing module is configured to recognize, interpret, and understand one or more contexts of at least one of the message, the audio, the indication, the traffic sign, the text, and the image through an artificial intelligence module. In another embodiment, the control module communicates a command to an electric drive unit based on the one or more contexts. The command instructs the electric drive unit to take predefined action. The predefined action comprises at least one of applying an autobrake, passing through the one or more first restriction obstacles, stopping before the one or more first restriction obstacles, taking a second travel route, and adjusting a roof rack.

In one embodiment, the system 308 is part of the external infrastructure 310 (as shown in FIG. 3B). The system 308 operates the same as described above. The system 308 comprises the display 307 as part of the external infrastructure 310. In another embodiment, the system 308 is part of the vehicle (not shown in the figures). The infotainment unit displays the message, alerts, commands, warnings and/or any instructions to the vehicle. In one embodiment, the system directly communicates the instructions/commands to the control module or electric drive unit to directly execute automatically.

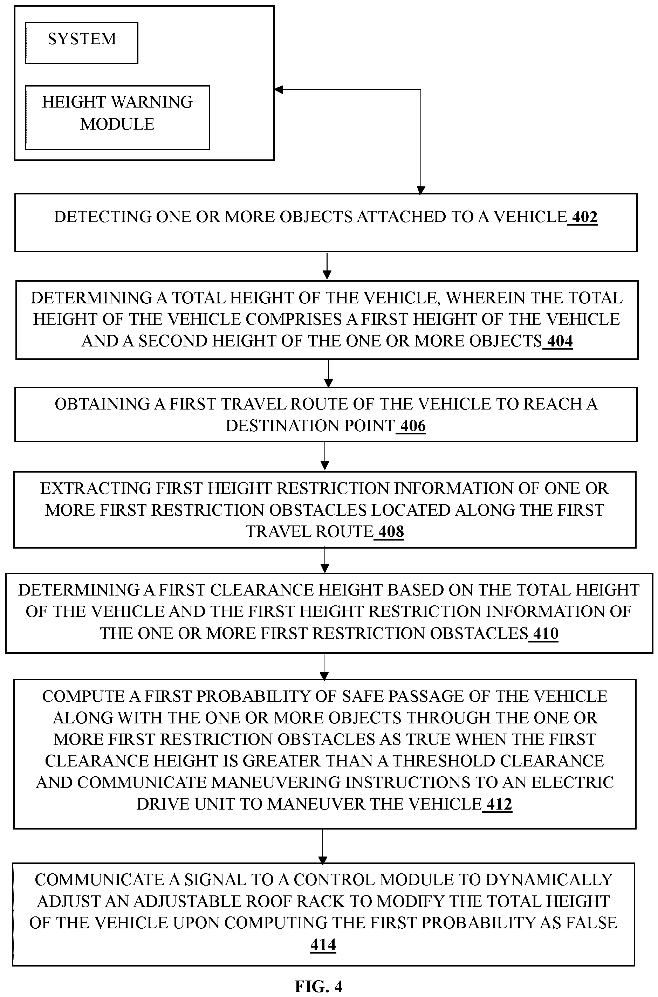

**FIG.** 4 illustrates a system, according to one or more embodiments. The system comprises a height warning module. The height warning module is configured to: detect one or more objects attached to a vehicle, at step 402; determine a total height of the vehicle, at step 404; obtain a first travel route of the vehicle to reach a destination point, at step 406; extract first height restriction information of one or more first restriction obstacles located along the first travel route, at step 408; determine a first clearance height based on the total height of the vehicle and the first height restriction information of the one or more first restriction obstacles, at step 410; compute a first probability of safe passage of the vehicle, along with the one or more objects through the one or more first restriction obstacles, as true when the first clearance height is greater than a threshold clearance and communicate maneuvering commands to an electric drive unit to maneuver the vehicle, at step 412; and communicate a signal to a control module to dynamically adjust an adjustable roof rack to modify the total height of the vehicle upon computing the first probability as false, at step 414. The first probability is computed as false when the first clearance height is lesser than a threshold clearance height.

. The total height of the vehicle comprises a first height of the vehicle and a second height of the one or more objects. The second height of the one or more objects may comprise a maximum height among the one or more objects.

The height warning module communicates the command to the electric drive unit based on the probability computed. The command may comprise a predefined action to be executed by the vehicle. In one embodiment, the height warning module may instruct the vehicle to stop before the restriction obstacle. In one embodiment, the height warning module may instruct the vehicle to pass through the restriction obstacle. In one embodiment, the height warning module may instruct the vehicle to adjust the adjustable roof rack to lower the height to a predefined/customized height and pass through the restriction obstacle. In one embodiment, the height warning module may instruct the vehicle to take a different route to reach the destination point without any collision. The height warning module may project a different route onto the dashboard of the vehicle.

In certain embodiments, the system that calculates a route for a vehicle includes a routing module comprising computer hardware. The routing module can receive an indication of a start node and an end node of a route to be traveled by a vehicle. The routing module can route a first route from the start node toward the end node until identifying a first groove node using a first routing network. The first grove node may be the point where the restriction obstacle is located and through which the vehicle cannot pass due to height restriction. In some cases, the first groove node is not the end node. The routing module can also route an alternate route to the end node. The routing module may check for restriction obstacles within the alternate route and determine whether the vehicle having the total height can pass through. Further, the routing module can identify a groove route from the first groove node to the second groove node using a second routing network to produce an initial route comprising the first route, the groove route, and the second route. The second routing network can include a subset of nodes of the first routing network. Moreover, the routing module can refine the initial route, using the first routing network, to produce an output route by evaluating the groove route to identify an alternative route to at least a portion of the groove route based at least in part on distance from the groove route and one or more routing factors. In one embodiment, the routing module takes into account the fuel availability of the vehicle and suggests an alternate route. The routing module suggests a shorter route among the one or more alternate routes based on the fuel availability.

In certain embodiments, the routing module for calculating routes can include a street classification module comprising computer hardware. The street classification module can assign values to streets of a network of streets in a geographic region for the purpose of efficiently determining how to route the vehicle. The values can be indicative of positions of the restriction obstacle and their restriction information (e.g., height, width, etc.). The street classification module can also store the assigned values in a computer database. The system may also include a route calculation module that can calculate a first route on the network of streets in the geographic region for the vehicle using the assigned values stored in the computer database to penalize or favor certain directions of travel over other directions of travel at the intersections. The route calculation module can also output the first route to a navigation device associated with the first vehicle for presentation to a driver of the first vehicle.

In one embodiment, the routing module determines the availability of the fuel and communicates to a control module of the vehicle when there is no sufficient fuel for the vehicle to take the alternate route. The control module provides warning regarding the fuel availability. In one embodiment, the control module communicates suggestions to the driver via the dashboard to lower the air capacity within the tires to a predefined capacity (e.g., 25 psi) of the vehicle to lower the total height of the vehicle. In one embodiment, the control module communicates suggestions to the driver via the dashboard to detach the loads at the roof top from the vehicle to lower the total height of the vehicle and proceed to the destination point without collision.

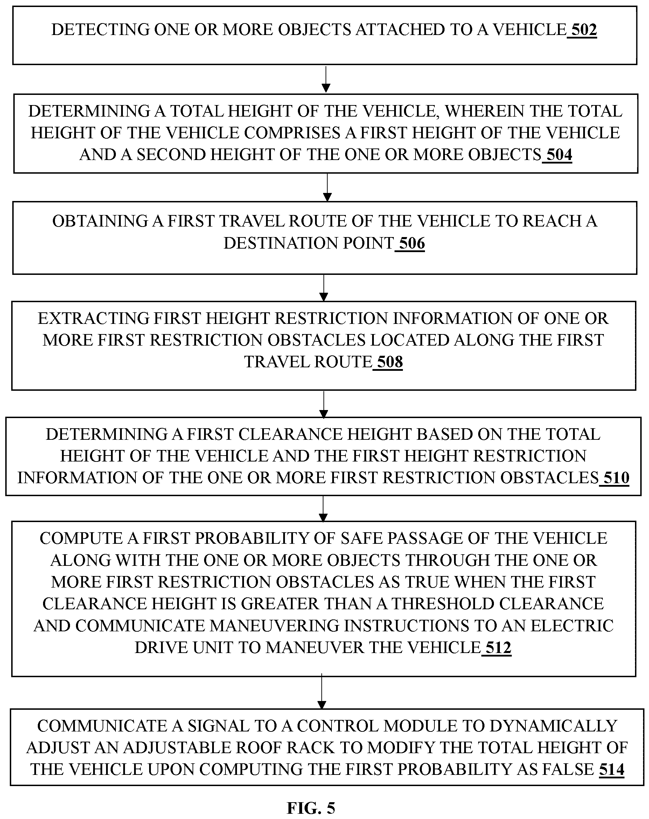

In another aspect, a method is described. FIG. 5 illustrates a method according to one or more embodiments. The method comprises following technical steps: The height warning module detects one or more objects attached to a vehicle, at step 502. The height warning module then determines a total height of the vehicle, at step 504. The total height of the vehicle comprises a first height of the vehicle and a second height of the one or more objects. The height warning module then obtains a first travel route of the vehicle to reach a destination point, at step 506. The height warning module then extracts first height restriction information of one or more first restriction obstacles located along the first travel route, at step 508. The height warning module then determines a first clearance height based on the total height of the vehicle and the first height restriction information of the one or more first restriction obstacles, at step 510. The height warning module then computes a first probability of safe passage of the vehicle, along with the one or more objects through the one or more first restriction obstacles, as true when the first clearance height is greater than a threshold clearance and communicates maneuvering commands to an electric drive unit to maneuver the vehicle, at step 512. The second height of the one or more objects comprises a maximum height among the one or more objects. The height warning module then communicates a signal to a control module to dynamically adjust an adjustable roof rack to modify the total height of the vehicle upon computing the first probability as false, at step 514. The first probability is computed as false when the first clearance height is lesser than a threshold clearance height.

In another embodiment, the method further comprises the following technical steps executed by the height warning module. The height warning module computes one or more second travel routes for the vehicle to reach the destination point. The height warning module computing the one or more second travel routes for the vehicle to reach the destination point comprises the following technical steps. The height warning module identifies a current location of the vehicle. The height warning module obtains the destination point of the vehicle. The height warning module determines one or more third travel routes that lead to the destination point based on the current location and the destination point. The height warning module then extracts second height restriction information of one or more second restriction obstacles located along the one or more third travel routes. The height warning module then determines a second clearance height based on the total height of the vehicle and the second height restriction information of the one or more second restriction obstacles. The height warning module then computes a second probability of the safe passage of the vehicle, along with the one or more objects through the one or more second restriction obstacles, as true when the second clearance height is greater than the threshold clearance. The height warning module then computes the one or more second travel routes among the one or more third travel routes for the vehicle to reach the destination point, wherein for the one or more second travel routes the second probability is computed as true.

In another embodiment, the height warning module communicates a command to an electric drive unit of the vehicle through a communication module upon computing the first probability of the safe passage of the vehicle as false. The command instructs the electric drive unit to apply autobrake to stop at a predefined distance prior to the one or more first restriction obstacles. The system establishes, through a communication module, a wireless communication with at least one of the vehicles, the one or more first restriction obstacles, an external infrastructure, and one or more nearby vehicles.

In another embodiment, the method further comprises the following steps executed by NLP module. The NLP module recognizes, interprets, and analyzes, one or more contexts of at least one of a message, an audio, an indication, a traffic sign, a text, and an image through an artificial intelligence provided to the vehicle. The NLP module communicates the command to the control module and/or the electric drive unit.

In another embodiment, the method further comprises the following steps executed by the AI module. The AI module is pretrained using a first dataset comprising one or more traffic signs, one or more messages, one or more indications, one or more texts, one or more images, and one or more videos to recognize, interpret, and understand one or more contexts. The AI module is then further trained using a second dataset to learn, improve and understand the one or more contexts in an optimized way. The AI module then interprets and analyzes the one or more contexts and communicates a command to an electric drive unit based on the analyzed context.

In another embodiment, the method further comprises the following steps executed by the control module. The control module dynamically adjusts an adjustable roof rack in order to lower the total height of the vehicle. In another embodiment, the control module dynamically adjusts the adjustable roof rack to one of a first level, a second level, and a third level. In another embodiment, the control module dynamically adjusts the adjustable roof rack to one of a first level, a second level, and a third level based on a command received from the artificial intelligence module.

In another embodiment, the method further comprises the following steps executed by the width warning module. The width warning module detects the one or more objects attached to the vehicle. The width warning module determines a total width of the vehicle. The total width of the vehicle comprises a first width of the vehicle and a second width of the one or more objects. The width warning module obtains the first travel route of the vehicle to reach the destination point. The width warning module extracts first width restriction information of the one or more first restriction obstacles located along the first travel route. The width warning module determines a first clearance width based on the total width of the vehicle and the first height restriction information of the one or more first restriction obstacles. The width warning module computes a second probability of the safe passage of the vehicle, along with the one or more objects through the one or more first restriction obstacles, as true when the first clearance width is greater than a threshold clearance width.

In one embodiment, the width warning module communicates a command to an electric drive unit of the vehicle through a communication module upon computing the second probability of the safe passage of the vehicle, along with the one or more objects through the one or more first restriction obstacles, as false. In another embodiment, the command instructs the electric drive unit to apply autobrake to stop at a predefined distance prior to the one or more first restriction obstacles.

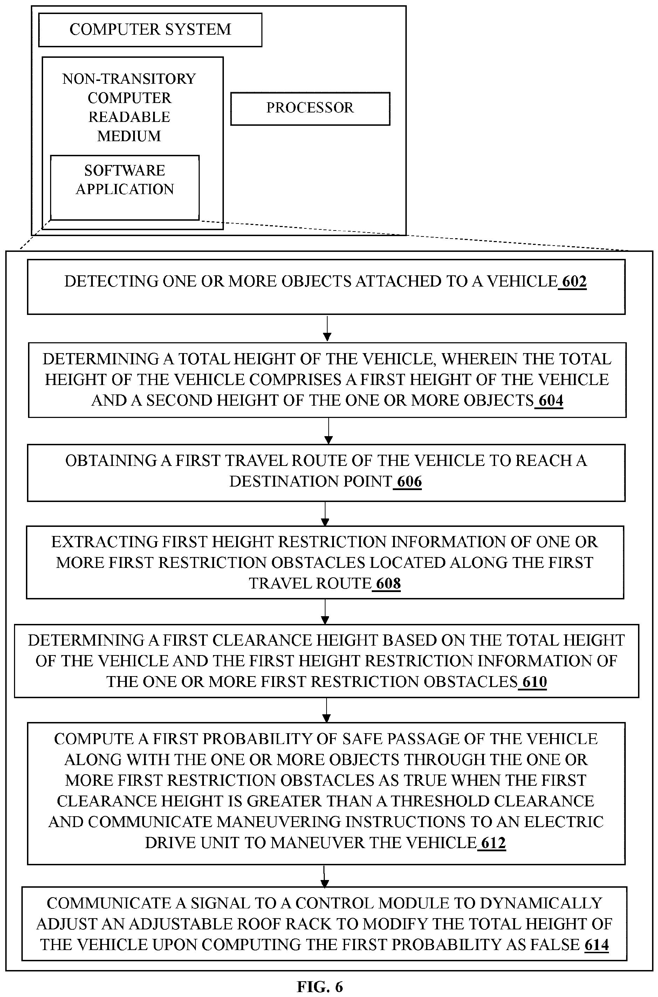

In yet another aspect, a non-transitory storage medium storing a sequence of instructions is described. FIG. 6 illustrates the non-transitory storage medium, according to one or more embodiments. The non-transitory storage medium which when executed by a processor causes: detecting one or more objects attached to a vehicle, at step 602; determining a total height of the vehicle, wherein the total height of the vehicle comprises a first height of the vehicle and a second height of the one or more objects, at step 604; obtaining a first travel route of the vehicle to reach a destination point, at step 606; extracting first height restriction information of one or more first restriction obstacles located along the first travel route, at step 608; determining a first clearance height based on the total height of the vehicle and the first height restriction information of the one or more first restriction obstacles, at step 610; computing a first probability of safe passage of the vehicle, along with the one or more objects through the one or more first restriction obstacles, as true when the first clearance height is greater than a threshold clearance and communicate maneuvering commands to an electric drive unit to maneuver the vehicle, at step 612; and communicating a signal to a control module to dynamically adjust an adjustable roof rack to modify the total height of the vehicle upon computing the first probability as false, at step 614. The first probability is computed as false when the first clearance height is lesser than a threshold clearance height.

The non-transitory storage medium further causes: computing one or more second travel routes for the vehicle to reach the destination point. In one embodiment, the non-transitory storage medium computing the one or more second travel routes for the vehicle to reach the destination point causes: identifying a current location of the vehicle; obtaining the destination point of the vehicle; determining one or more third travel routes that lead to the destination point based on the current location and the destination point; extracting second height restriction information of one or more second restriction obstacles located along the one or more third travel routes; determining a second clearance height based on the total height of the vehicle and the second height restriction information of the one or more second restriction obstacles; and computing a second probability of the safe passage of the vehicle, along with the one or more objects through the one or more second restriction obstacles, as true when the second clearance height is greater than the threshold clearance; and computing the one or more second travel routes among the one or more third travel routes for the vehicle to reach the destination point, wherein for the one or more second travel routes the second probability is computed as true.

In another embodiment, the non-transitory storage medium further causes: communicating a command to an electric drive unit of the vehicle through a communication module upon computing the first probability of the safe passage of the vehicle, along with the one or more objects through the one or more first restriction obstacles, as false.

In another embodiment, the command instructs the electric drive unit to apply autobrake to stop at a predefined distance prior to the one or more first restriction obstacles.

In another embodiment, the non-transitory storage medium further causes: establishing, by a communication module, a wireless communication with at least one of the vehicles, the one or more first restriction obstacles, an external infrastructure, and one or more nearby vehicles.

In another embodiment, the non-transitory storage medium further causes: recognizing, interpreting, and analyzing, by a natural language processing (NLP) module, one or more contexts of at least one of a message, an audio, an indication, a traffic sign, a text, and an image through an artificial intelligence.

In another embodiment, the non-transitory storage medium further causes: pretraining, an artificial intelligence module, using a first dataset comprising one or more traffic signs, one or more messages, one or more indications, one or more texts, one or more images, and one or more videos to recognize, interpret, and understand one or more contexts.

In another embodiment, the non-transitory storage medium further causes: training the artificial intelligence module using a second dataset to learn, improve and understand the one or more contexts in an optimized way.

In another embodiment, the non-transitory storage medium further causes: interpreting and analyzing, by an artificial intelligence module, the one or more contexts and communicating a command to an electric drive unit based on the analyzed context.

In another embodiment, the non-transitory storage medium further causes: dynamically adjusting an adjustable roof rack in order to lower the total height of the vehicle.

In another embodiment, the non-transitory storage medium further causes: dynamically adjusting the adjustable roof rack to one of a first level, a second level, and a third level.

In another embodiment, the non-transitory storage medium further causes: dynamically adjusting the adjustable roof rack to one of a first level, a second level, and a third level based on a command received from an artificial intelligence module.

In another embodiment, the non-transitory storage medium further causes: detecting the one or more objects attached to the vehicle; determining a total width of the vehicle, wherein the total width of the vehicle comprises a first width of the vehicle and a second width of the one or more objects; obtaining the first travel route of the vehicle to reach the destination point; extracting first width restriction information of the one or more first restriction obstacles located along the first travel route; determining a first clearance width based on the total width of the vehicle and the first height restriction information of the one or more first restriction obstacles; and computing a second probability of the safe passage of the vehicle along with the one or more objects through the one or more first restriction obstacles as true when the first clearance width is greater than a threshold clearance width.

In another embodiment, the non-transitory storage medium further causes: communicating a command to an electric drive unit of the vehicle through a communication module upon computing that the second probability of the safe passage of the vehicle, along with the one or more objects through the one or more first restriction obstacles, is false. The command instructs the electric drive unit to apply autobrake to stop at a predefined distance prior to the one or more first restriction obstacles.

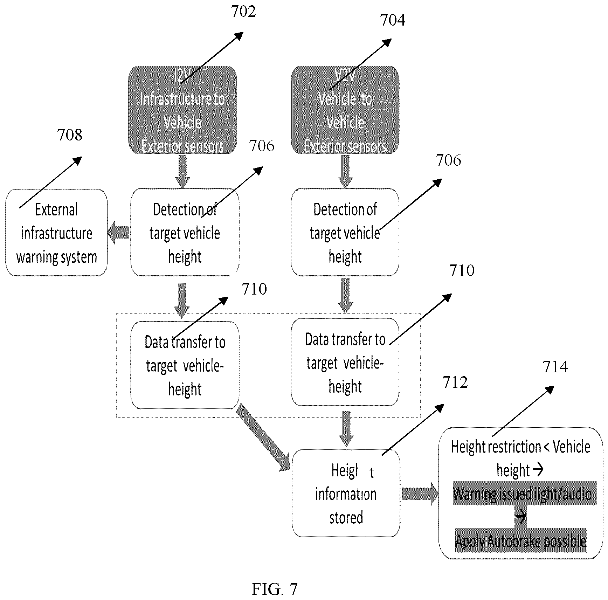

**FIG.** 7 illustrates a flowchart illustrating determination of total height of the vehicles comprising overhead loads and providing assistance to vehicles, according to one or more embodiments. At step 702, the system is placed as part of the external infrastructure to determine the total height of the vehicle including the loads using the sensors. At step 704, the system is placed as part of the nearby vehicles to determine the total height of the target vehicle including the loads using the sensors. At step 706, the target vehicle's total height is determined. At step 708, the external infrastructure may comprise a warning system to provide warning upon the target vehicle approaching the restriction obstacle. The warning system is configured to recognize the identity of the vehicle using video analytics by scanning a license plate or number plate or an identification tag of the vehicle and providing a warning. At step 710, the control module within the vehicle receives the total height of the vehicle. At step 712, the vehicle records and stores the total height of the vehicle for future purposes. The artificial intelligence module may use the stored datasets and corresponding actions taken by the vehicle for learning. At step 714, the control module analyzes the total height of the vehicle and the permissible height allowed for the restriction obstacle and may compute the threshold clearance in order to compute the probability of safe passage. The control module then issues a warning, or alert based on the analysis and computation. In one embodiment, the control module instructs the electric drive unit to apply autobrake via auto braking unit.

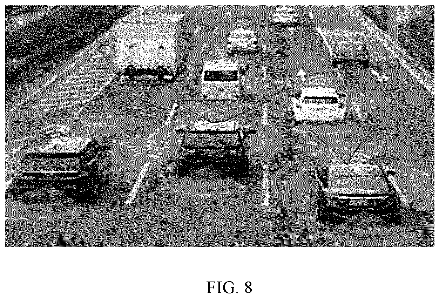

**FIG.** 8 illustrates a vehicle to vehicle data transfer, according to one or more embodiments. In one embodiment, the system is part of the nearby vehicle and configured to detect the total height of the target vehicle. The system residing within the nearby vehicle comprises sensors to determine the total height of the vehicle. In one embodiment, the sensors may reside outside the system in one or more external infrastructures. The system upon computing the total height of the vehicle determines the probability of the safe passage of the vehicle through the restriction obstacle prior to reaching the restriction obstacle. The system determines the probability of safe passage height wise and widthwise. The system then communicates the commands to the surrounding or nearby vehicles via a vehicle to vehicle (V2V) data transfer.

The nearby vehicles traveling in the same direction towards the restriction obstacles are informed about the probability of the safe passage for a predefined height. The systems within the respective vehicle then perform the computation of probability for its own height (including heights of the loads attached to the respective vehicles). The control module within the respective vehicles then communicates appropriate commands to the electric drive unit to take appropriate actions (such as one of pass through, stop before the restriction obstacle, adjust the roof rack, etc.).

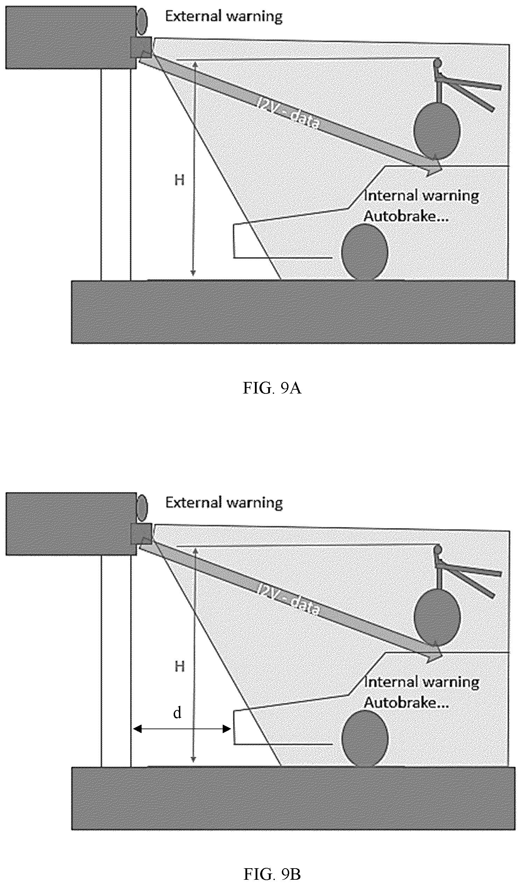

**FIG. 9A** illustrates a determination of total height of the vehicle, according to one or more embodiments. The system is part of the restriction obstacle. The system comprises sensors affixed onto the restriction obstacle. The sensors determine the total height of the vehicle including the loads attached onto the vehicle. "H" refers to the total height of the vehicle. H is equal to the sum of the height of the vehicle and the height of the loads. The system determining the total height is described already.

The sensors communicate the total height of the vehicle to the system. The system is aware of the height of the restriction obstacle and permissible height through the restriction obstacle. For example, in case of a railway crossing having an overhead electric line, the permissible height is strictly maintained and followed as it may provide inductance and provide electric shock to the vehicle despite the clearance height available.

The system then recognizes the identity of the vehicle approaching the restriction obstacle. Upon identifying the vehicle, the system provides an external warning to the vehicle if the total height of vehicle is greater than the permissible height. The system further communicates commands/messages/instructions to at least one of the control modules and the electric drive unit. The message may comprise commands regarding applying auto brake, or passing through the restriction obstacle, or stopping before the restriction obstacle or adjusting the roof rack or taking a different route to reach the destination point.

**FIG. 9B** illustrates a determination of distance between the vehicle and the restriction obstacle, according to one or more embodiments. The system is part of the restriction obstacle. The system comprises sensors affixed onto the restriction obstacle. The sensors determine the distance between the vehicle and the restriction obstacle. "d" refers to the distance between the vehicle and the restriction obstacle. The sensors communicate the distance "d" to the system. The system is aware of the height of the restriction obstacle and permissible threshold height through the restriction obstacle. For example, in case of a railway crossing having an overhead electric line, the permissible height is strictly maintained and followed as it may provide inductance and provide electric shock to the vehicle despite the clearance height available.

The system then recognizes the identity of the vehicle approaching the restriction obstacle. Upon identifying the vehicle, the system provides an external warning to the vehicle upon reaching the distance "d". The system further communicates commands/messages/instructions to at least one of the control module and the electric drive unit. The message may comprise commands regarding applying auto brake, or passing through the restriction obstacle, or stopping before the restriction obstacle or adjusting the roof rack or taking a different route to reach the destination point. The distance "d" is sufficient for the vehicle (manual driven vehicle or self-driven vehicle) to take predefined action for safe passage.

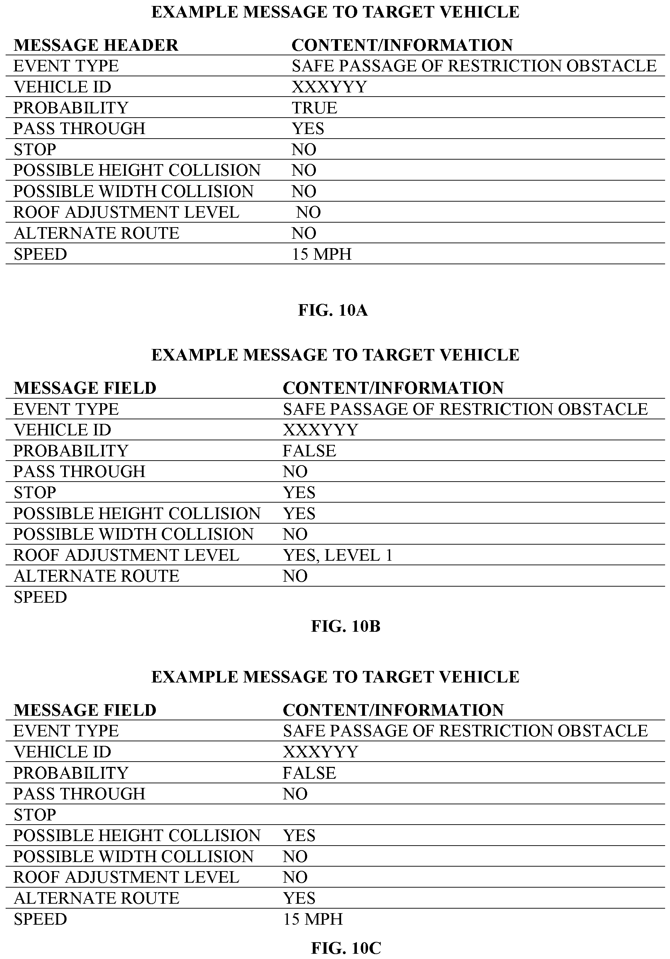

As an example, **FIG. 10A, 10B, and 10C** illustrate messages received by a target vehicle, according to one or more embodiments. The target vehicle receives the sample message from the system. The sample message shown in FIG. 10A-10C comprises fields such as event type, vehicle ID, probability, pass through, stop, possible height collision, possible width collision, roof rack adjustment, alternate route, and target speed.

The "vehicle ID" field may comprise a serial identification number, or a tag associated with the electric vehicle configured to identify and locate the electric vehicle. The "event type" field may be safe passage through restriction obstacle. The "probability" field of the safe passage through the restriction load based on the current scenario is one of true and false. The field "pass through" indicates YES or NO appropriately. The field "stop" indicates YES or NO appropriately. The field "Possible height collision" indicates YES or NO appropriately. The field "Possible width collision" indicates YES or NO appropriately. The field roof adjustment level may indicate level of adjustment (e.g., level 1, level 2, level 3) if roof rack adjustment indicates YES. The "speed" defines the speed of the vehicle (e.g., 15mph) while passing through.

In an embodiment, the system further comprises a cyber security module wherein the cyber security module comprises an information security management module providing isolation between the communication module and servers.

In an embodiment, the information security management module is operable to, receive data from the communication module, exchange a security key at a start of the communication between the communication module and the server, receive the security key from the server, authenticate an identity of the server by verifying the security key, analyze the security key for a potential cyber security threat, negotiate an encryption key between the communication module and the server, encrypt the data, and transmit the encrypted data to the server when no cyber security threat is detected.

In an embodiment, the information security management module is operable to exchange a security key at a start of the communication between the communication module and the server, receive the security key from the server, authenticate an identity of the server by verifying the security key, analyze the security key for a potential cyber security threat, negotiate an encryption key between the system and the server, receive encrypted data from the server, decrypt the encrypted data, perform an integrity check of the decrypted data and transmit the decrypted data to the communication module when no cyber security threat is detected.

In an embodiment, the system may comprise a cyber security module. In one aspect, a secure communication management (SCM) computer device for providing secure data connections is provided. The SCM computer device includes a processor in communication with memory. The processor is programmed to receive, from a first device, a first data message. The first data message is in a standardized data format. The processor is also programmed to analyze the first data message for potential cyber security threats. If the determination is that the first data message does not contain a cyber security threat, the processor is further programmed to convert the first data message into a first data format associated with the vehicle environment and transmit the converted first data message into a first data format associated with the vehicle environment and transmit the converted first data message to the communication module using a first communication protocol associated with the negotiated protocol.

According to an embodiment, secure authentication for data transmissions comprises, provisioning a hardware-based security engine (HSE) located in the cyber security module, said HSE having been manufactured in a secure environment and certified in said secure environment as part of an approved network; performing asynchronous authentication, validation and encryption of data using said HSE, storing user permissions data and connection status data in an access control list used to define allowable data communications paths of said approved network, enabling communications of the cyber security module with other computing system subjects (e.g., communication module) to said access control list, performing asynchronous validation and encryption of data using security engine including identifying a user device (UD) that incorporates credentials embodied in hardware using a hardware-based module provisioned with one or more security aspects for securing the system, wherein security aspects comprising said hardware-based module communicating with a user of said user device and said HSE.

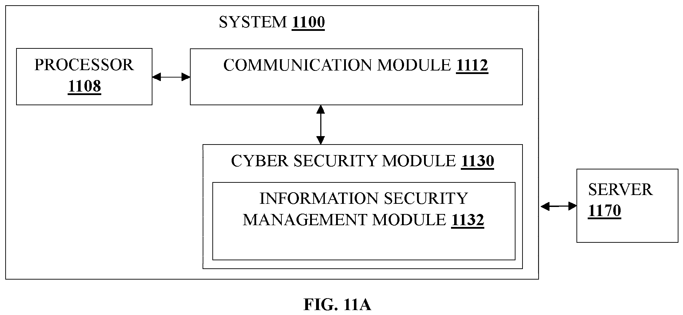

FIG. 11A shows the block diagram of the cyber security module according to an embodiment. In an embodiment, FIG. 11A shows the block diagram of the cyber security module. The communication of data between the system 1100 and the server 1170 through the communication module 1112 is first verified by the information security management module 1132 of cyber security module 1130 before being transmitted from the system to the server or from the server to the system. The information security management module is operable to analyze the data for potential cyber security threats, to encrypt the data when no cyber security threat is detected, and to transmit the data encrypted to the system or the server. System 1100 comprises a processor 1108.

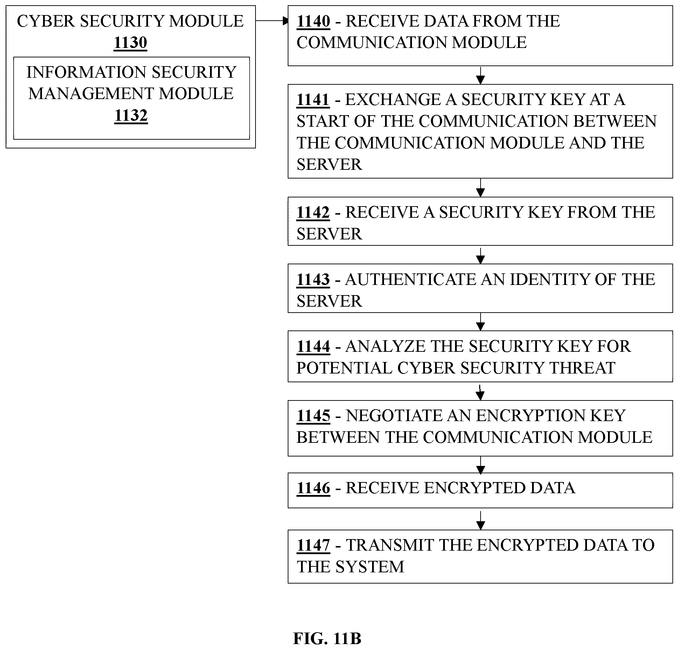

In an embodiment, the cyber security module further comprises an information security management module providing isolation between the system and the server. FIG. 11B shows the flowchart of securing the data through the cyber security module 1130. At step 1140, the information security management module 1132 is operable to receive data from the communication module. At step 1141, the information security management module exchanges a security key at the start of the communication between the communication module and the server. At step 1142, the information security management module receives a security key from the server. At step 1143, the information security management module authenticates an identity of the server by verifying the security key. At step 1144, the information security management module analyzes the security key for potential cyber security threats. At step 1145, the information security management module negotiates an encryption key between the communication module and the server. At step 1146, the information security management module receives the encrypted data. At step 1147, the information security management module transmits the encrypted data to the server when no cyber security threat is detected.

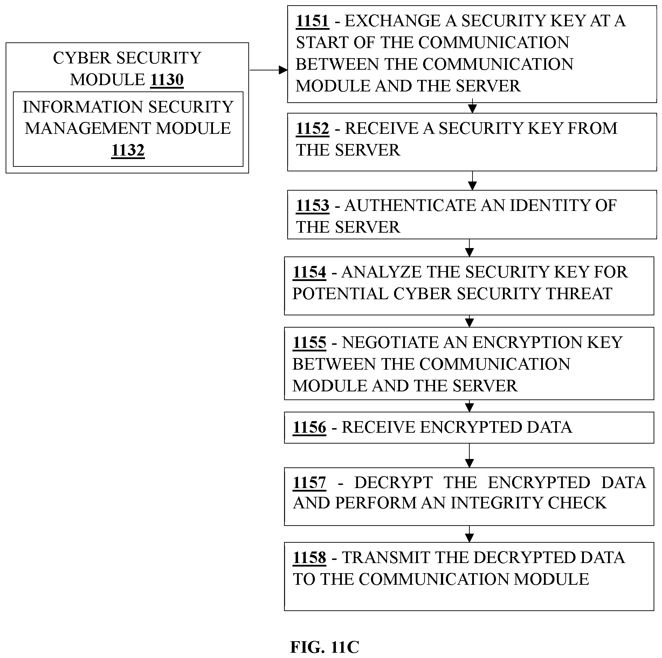

In an embodiment, FIG. 11C shows the flowchart of securing the data through the cyber security module 1130. At step 1151, the information security management module 1132 is operable to: exchange a security key at the start of the communication between the communication module and the server. At step 1152, the information security management module receives a security key from the server. At step 1153, the information security management module authenticates an identity of the server by verifying the security key. At step 1154, the information security management module analyzes the security key for potential cyber security threats. At step 1155, the information security management module negotiates an encryption key between the communication module and the server. At step 1156, the information security management module receives encrypted data. At step 1157, the information security management module decrypts the encrypted data, and performs an integrity check of the decrypted data. At step 1158, the information security management module transmits the decrypted data to the communication module when no cyber security threat is detected.

In an embodiment, the integrity check is a hash-signature verification using a Secure Hash Algorithm 256 (SHA256) or a similar method. In an embodiment, the information security management module is configured to perform asynchronous authentication and validation of the communication between the communication module and the server.

In an embodiment, the information security management module is configured to raise an alarm if a cyber security threat is detected. In an embodiment, the information security management module is configured to discard the encrypted data received if the integrity check of the encrypted data fails.

In an embodiment, the information security management module is configured to check the integrity of the decrypted data by checking accuracy, consistency, and any possible data loss during the communication through the communication module.

In an embodiment, the server is physically isolated from the system through the information security management module as shown in FIG. 11A. When the system communicates with the server as shown in FIG. 11B, identity authentication is first carried out on the system and the server. The system is responsible for communicating/exchanging a public key of the system and a signature of the public key with the server. The public key of the system and the signature of the public key are sent to the information security management module. The information security management module decrypts the signature and verifies whether the decrypted public key is consistent with the received original public key or not. If the decrypted public key is verified, the identity authentication is passed. Similarly, the system and the server carry out identity authentication on the information security management module. After the identity authentication is passed on to the information security management module, the two communication parties, the system and the server, negotiate an encryption key and an integrity check key for data communication of the two communication parties through the authenticated asymmetric key. A session ID number is transmitted in the identity authentication process, so that the key needs to be bound with the session ID number; when the system sends data to the outside, the information security gateway receives the data through the communication module, performs integrity authentication on the data, then encrypts the data through a negotiated secret key, and finally transmits the data to the server through the communication module and cyber security module. When the information security management module receives data through the communication module as shown in FIG. 11C, the data is decrypted first, integrity verification is carried out on the data after decryption, and if verification is passed, the data is sent out through the communication module; otherwise, the data is discarded. In an embodiment, the identity authentication is realized by adopting an asymmetric key with a signature.

In an embodiment, the signature is realized by a pair of asymmetric keys which are trusted by the information security management module and the system, wherein the private key is used for signing the identities of the two communication parties, and the public key is used for verifying that the identities of the two communication parties are signed. Signing identity comprises a public and a private key pair. In other words, signing identity is referred to as the common name of the certificates which are installed in the user's machine.

In an embodiment, both communication parties need to authenticate their own identities through a pair of asymmetric keys, and a task in charge of communication with the information security management module of the system is identified by a unique pair of asymmetric keys.

In an embodiment, the dynamic negotiation key is encrypted by adopting an Rivest-Shamir-Adleman (RSA) encryption algorithm. RSA is a public-key cryptosystem that is widely used for secure data transmission. The negotiated keys include a data encryption key and a data integrity check key.

In an embodiment, the data encryption method is a Triple Data Encryption Algorithm (3DES) encryption algorithm. The integrity check algorithm is a Hash-based Message Authentication Code (HMAC-MD5-128) algorithm. When data is output, the integrity check calculation is carried out on the data, the calculated Message Authentication Code (MAC) value is added with the header of the value data message, then the data (including the MAC of the header) is encrypted by using a 3DES algorithm, the header information of a security layer is added after the data is encrypted, and then the data is sent to the next layer for processing. In an embodiment the next layer refers to a transport layer in the Transmission Control Protocol / Internet Protocol (TCP/IP) model.

The information security management module ensures the safety, reliability, and confidentiality of the communication between the system and the server through the identity authentication when the communication between the two communication parties starts the data encryption and the data integrity authentication. The method is particularly suitable for an embedded platform which has less resources and is not connected with a Public Key Infrastructure (PKI) system and may ensure that the safety of the data on the server cannot be compromised by a hacker attack under the condition of the Internet by ensuring the safety and reliability of the communication between the system and the server.

In an embodiment of the system, the machine learning model is configured to learn using labelled data using a supervised learning method, wherein the supervised learning method comprises logic using at least one of a decision tree, a logistic regression, a support vector machine, a k-nearest neighbors, a Naive Bayes, a random forest, a linear regression, a polynomial regression, and a support vector machine for regression.

In an embodiment of the system, the machine learning model is configured to learn from the real-time data using an unsupervised learning method, wherein the unsupervised learning method comprises logic using at least one of a k-means clustering, a hierarchical clustering, a hidden Markov model, and an apriori algorithm.

In an embodiment of the system, the machine learning model has a feedback loop, wherein the output from a precious step is fed back to the model in real-time to improve the performance and accuracy of the output of a next step.

In an embodiment of the system, the machine learning model comprises a recurrent neural network model.

In an embodiment of the system, the machine learning model has a feedback loop, wherein the learning is further reinforced with a reward for each true positive of the output of the system.

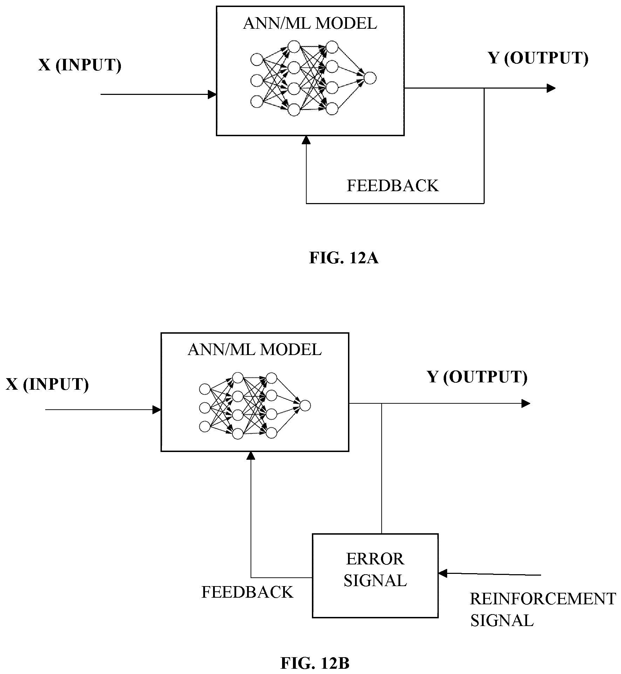

**FIG. 12A** shows a structure of the neural network / machine learning model with a feedback loop. Artificial neural networks (ANNs) model comprises an input layer, one or more hidden layers, and an output layer. Each node, or artificial neuron, connects to another and has an associated weight and threshold. If the output of any individual node is above the specified threshold value, that node is activated, sending data to the next layer of the network. Otherwise, no data is passed to the next layer of the network. A machine learning model or an ANN model may be trained on a set of data to take a request in the form of input data, make a prediction on that input data, and then provide a response. The model may learn from the data. Learning can be supervised learning and/or unsupervised learning and may be based on different scenarios and with different datasets. Supervised learning comprises logic using at least one of a decision tree, logistic regression, and support vector machines. Unsupervised learning comprises logic using at least one of a k-means clustering, a hierarchical clustering, a hidden Markov model, and an apriori algorithm. The output layer may predict or detect the probability of safe passage, adjustment of roof rack based on the input datasets.

In an embodiment, ANN's may be a Deep-Neural Network (DNN), which is a multilayer tandem neural network comprising Artificial Neural Networks (ANN), Convolution Neural Networks (CNN) and Recurrent Neural Networks (RNN) that can recognize features from inputs, do an expert review, and perform actions that require predictions, creative thinking, and analytics. In an embodiment, ANNs may be Recurrent Neural Network (RNN), which is a type of Artificial Neural Networks (ANN), which uses sequential data or time series data. Deep learning algorithms are commonly used for ordinal or temporal problems, such as language translation, Natural Language Processing (NLP), speech recognition, and image recognition, etc. Like feedforward and convolutional neural networks (CNNs), recurrent neural networks utilize training data to learn. They are distinguished by their "memory" as they take information from prior input via a feedback loop to influence the current input and output. An output from the output layer in a neural network model is fed back to the model through the feedback. The variations of weights in the hidden layer(s) will be adjusted to fit the expected outputs better while training the model. This will allow the model to provide results with far fewer mistakes.

The neural network is featured with the feedback loop to adjust the system output dynamically as it learns from the new data. In machine learning, backpropagation and feedback loops are used to train an AI model and continuously improve it upon usage. As the incoming data that the model receives increases, there are more opportunities for the model to learn from the data. The feedback loops, or backpropagation algorithms, identify inconsistencies and feed the corrected information back into the model as an input.

Even though the AI/ML model is trained well, with large sets of labelled data and concepts, after a while, the models' performance may decline while adding new, unlabelled input due to many reasons which include, but not limited to, concept drift, recall precision degradation due to drifting away from true positives, and data drift over time. A feedback loop to the model keeps the AI results accurate and ensures that the model maintains its performance and improvement, even when new unlabelled data is assimilated. A feedback loop refers to the process by which an AI model's predicted output is reused to train new versions of the model.

Initially, when the AI/ML model is trained, a few labelled samples comprising both positive and negative examples of the concepts (for e.g., safe passage probability) are used that are meant for the model to learn. Afterward, the model is tested using unlabelled data. By using, for example, deep learning and neural networks, the model can then make predictions on whether the desired concept/s (for e.g., safe passage probability to be detected) are in unlabelled images. Each image is given a probability score where higher scores represent a higher level of confidence in the models' predictions. Where a model gives an image a high probability score, it is auto labelled with the predicted concept. However, in the cases where the model returns a low probability score, this input may be sent to a controller (may be a human moderator) which verifies and, as necessary, corrects the result. The human moderator may be used only in exceptional cases. The feedback loop feeds labelled data, auto-labelled or controller-verified, back to the model dynamically and is used as training data so that the system can improve its predictions in real-time and dynamically.

**FIG. 12B** shows a structure of the neural network / machine learning model with reinforcement learning. The network receives feedback from authorized networked environments. Though the system is similar to supervised learning, the feedback obtained in this case is evaluative not instructive, which means there is no teacher as in supervised learning. After receiving the feedback, the network performs adjustments of the weights to get better predictions in the future. Machine learning techniques, like deep learning, allow models to take labeled training data and learn to recognize those concepts in subsequent data and images. The model may be fed with new data for testing, hence by feeding the model with data it has already predicted over, the training gets reinforced. If the machine learning model has a feedback loop, the learning is further reinforced with a reward for each true positive of the output of the system. Feedback loops ensure that AI results do not stagnate. By incorporating a feedback loop, the model output keeps improving dynamically and over usage/time.

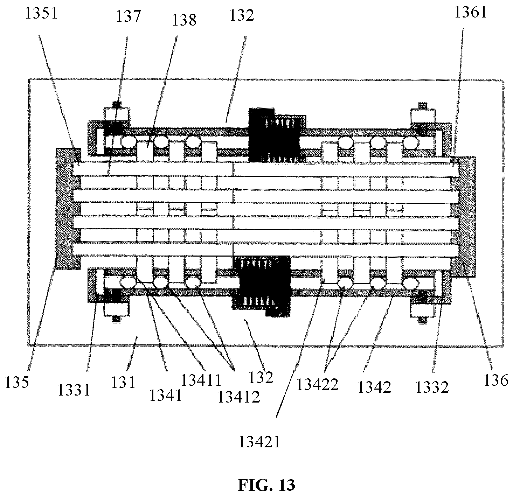

**FIG. 13** illustrates an adjustable roof rack, according to one or more embodiments. As shown in the figure: the adjustable roof rack comprises two body side frames 132. Each body side frame 132 has two ends and has the leg 1331, 1332 that is fixed in roof 131. Two legs 1331, 1332 have a L type cross section. The cross section opening part is oppositely arranged. One sidewall of leg 1331, 1332 is respectively fixed by the hinged movable body side frame 1341, 1342 of articulation piece. The activity body side frame 1341, 1342 is a hollow tube structure, and vertically be arranged with perforation 13411, 13412 ,13421, 13422 on both directions in inner side. The top of this activity body side frame 1341, 1342 is respectively arranged with a flexible connection mechanism. The adjustable roof rack has forward and backward spacings 135, 136 on this roof 131. The forward and backward 135, 136 spacing are identical with the spacing of body side frame 132 with two legs 1331, 1332, and has the perforation 1351, 1361 that is oppositely arranged on forward and backward spacing 135, 136. The perforation 13411, 13412, 13421, 13422, 1351, 1361 aperture are in unanimities. Other disposes the telescopic pipe link 137 of length is arranged in perforation identical with forward and backward 135, 136 spacings of some length. The identical interior telescopic pipe link 138 of length is arranged in hole of spacing between some length and two body side frames 132.

In one embodiment, each movable body side frame 1341, 1342 can dug the state that is perpendicular to roof. The telescopic pipe link 137, 138 are in vertical position and arranged with on movable body side frame 1341, 1342 in both directions with perforation 13411, 13412, 13421, 13422 in, so just can form a high Fence structure.

In another embodiment, when baggage rack is not in use, the telescopic pipe link 137, 138 is arranged among the perforation 1351, 1361, 13411, 13421. The movable body side frame 1341, 1342 is turned down to come back and connect with the flexible connection mechanism 13413, 13423 on its top. In addition, this forward and backward 135, 136 can be higher than leg 1331, 1332. The roof rack can turn down when movable body side frame 1341, 1342 are just to form a common baggage rack after coming back. The telescopic pipe link 137 is arranged into bore a hole 1351, 1361. In an embodiment, the adjustable roof rack disclosed herein is automated.

The adjustable roof rack shown in (FIG. 13) comprises a adjustable roof rack, which comprises two side frames, two ends of each side frame are respectively provided with support feet arranged fixedly at top of automobile, the support feet have L-shaped cross section and are arranged oppositely at the opening of the cross section, one side wall of the support feet is respectively hinged with a movable side frame, the movable side frame is vertically arranged with through-holes in the inward two directions, moreover the top of the movable side frame is respectively arranged with an elastic connection mechanism; the automobile top is also provided with a front frame and a rear frame, the distance between the front frame and the rear frame is the same as that between the two support feet of the side frames, moreover the front frame and the rear frame are provided with through-holes that are arranged oppositely; additionally a plurality of extensible connection rods that has the same length as the distance between the front frame and the rear frame and can be arranged in the through-holes are arranged. The adjustable roof rack solves the technical problem that the height of the support feet of the side frames of the luggage carrier at the top of automobile cannot be adjusted so as to not facilitate to fasten large-size luggage, moreover the height of the luggage frame can be selected and prepared according to the size needed.

The descriptions of the one or more embodiments are for purposes of illustration but are not exhaustive or limiting to the embodiments described herein. Many modifications and variations will be apparent to those of ordinary skill in the art without departing from the scope and spirit of the described embodiments. The terminology used herein best explains the principles of the embodiments, the practical application and/or technical improvement over technologies found in the marketplace, and/or to enable others of ordinary skill in the art to understand the embodiments described herein.

The embodiments described herein include mere examples of systems and computer-implemented methods. It is, of course, not possible to describe every conceivable combination of components and/or computer-implemented methods for purposes of describing the one or more embodiments, but one of ordinary skill in the art can recognize that many further combinations and/or permutations of the one or more embodiments are possible. Furthermore, to the extent that the terms "includes", "has", "possesses", and the like are used in the detailed description, claims, appendices and/or drawings such terms are intended to be inclusive in a manner similar to the term "comprising" as "comprising" is interpreted when employed as a transitional word in a claim.

Other specific forms may embody the present invention without departing from its spirit or characteristics. The described embodiments are in all respects illustrative and not restrictive. Therefore, the appended claims rather than the description herein indicate the scope of the invention. All variations which come within the meaning and range of equivalency of the claims are within their scope.

Various non-limiting aspects of various embodiments described herein are presented in the following clauses.
1. A system comprising:
   a height warning module that is configured to:
   detect one or more objects attached to a vehicle;
   determine a total height of the vehicle, wherein the total height of the vehicle comprises a first height of the vehicle and a second height of the one or more objects;
   obtain a first travel route of the vehicle to reach a destination point;
   extract first height restriction information of one or more first restriction obstacles located along the first travel route;
   determine a first clearance height based on the total height of the vehicle and the first height restriction information of the one or more first restriction obstacles;
   compute a first probability of safe passage of the vehicle along with the one or more objects through the one or more first restriction obstacles as true, when the first clearance height is greater than a threshold clearance height and communicate maneuvering commands to an electric drive unit to maneuver the vehicle; and
   communicate a signal to a control module to dynamically adjust an adjustable roof rack to reduce the total height of the vehicle upon computing the first probability as false, wherein the first probability is computed as false when the first clearance height is lesser than the threshold clearance height.
2. The system of clause 1, wherein the system is part of the one or more first restriction obstacles along the first travel route.
3. The system of clause 1, wherein the system is part of the vehicle.
4. The system of clause 1, wherein the system is part of one or more nearby vehicles.
5. The system of clause 1, wherein the system is part of an external infrastructure.
6. The system of clause 1, wherein the system communicates with the vehicle.
7. The system of clause 1, wherein the system communicates with one or more nearby vehicles.
8. The system of clause 1, wherein the system comprises one or more sensors.
9. The system of clause 8, wherein the one or more sensors comprises a laser sensor, a stadiometer, a distance sensor, a camera, a photoelectric sensor, a measurement sensor, and an ultrasonic sensor.
10. The system of clause 9, wherein the camera captures at least one of an image and a video of the vehicle, wherein the vehicle comprises the one or more objects attached.
11. The system of clause 1, wherein the system communicates a command to the electric drive unit of the vehicle through a communication module upon computing the first probability of the safe passage of the vehicle along with the one or more objects through the one or more first restriction obstacles as false.
12. The system of clause 11, wherein the command instructs the electric drive unit to apply autobrake to stop at a predefined distance prior to the one or more first restriction obstacles.
13. The system of clause 9, wherein the one or more sensors is configured to determine a distance between the vehicle and the one or more first restriction obstacles.
14. The system of clause 9, wherein the one or more sensors is configured to determine the total height of the vehicle.
15. The system of clause 9, wherein the one or more sensors is configured to determine a distance between the vehicle and one or more nearby vehicles.
16. The system of clause 9, wherein the one or more sensors is configured to determine a distance between the vehicle and an external infrastructure.
17. The system of clause 9, wherein the system further comprises a communication module.
18. The system of clause 17, wherein the communication module is configured to establish wireless communication with at least one of the vehicle, the one or more first restriction obstacles, an external infrastructure, and one or more nearby vehicles.
19. The system of clause 17, wherein the one or more first restriction obstacles comprises a display that displays a message to the vehicle.
20. The system of clause 19, wherein the message comprises a traffic sign.
21. The system of clause 1, wherein the vehicle comprises the control module.
22. The system of clause 21, wherein the control module comprises a natural language processing module configured to recognize, interpret, and understand at least one of a message, an audio, an indication, a traffic sign, a text, and an image.
23. The system of clause 22, wherein the natural language processing module is configured to recognize, interpret, and understand a context of at least one of the message, the audio, the indication, the traffic sign, the text, and the image through an artificial intelligence module.
24. The system of clause 22, wherein the control module communicates a command to the electric drive unit.
25. The system of clause 1, wherein the system comprises an artificial intelligence module.
26. The system of clause 25, wherein the artificial intelligence module is pretrained using a first dataset comprising one or more traffic signs, one or more messages, one or more indications, one or more texts, one or more images, and one or more videos to recognize, interpret, and understand one or more contexts.
27. The system of clause 26, wherein the artificial intelligence module is trained using a second dataset to learn, improve and understand the one or more contexts in an optimized way.
28. The system of clause 27, wherein the artificial intelligence module understands the one or more contexts and communicates a command to the electric drive unit.
29. The system of clause 28, wherein the command instructs at least one of the electric drive unit and the control module to perform a predefined action upon reaching the one or more first restriction obstacles.
30. The system of clause 29, wherein the predefined action comprises at least one of applying an autobrake, passing through the one or more first restriction obstacles, stopping before the one or more first restriction obstacles, taking a second travel route, and adjusting the adjustable roof rack.
31. The system of clause 21, wherein the control module provides a user interface via an infotainment unit through which the system accepts the total height of the vehicle from a user as an input.
32. The system of clause 1, wherein the vehicle comprises the adjustable roof rack that holds the one or more objects.
33. The system of clause 32, wherein the vehicle comprises the control module that instructs the adjustable roof rack to dynamically adjust in order to lower the total height of the vehicle.
34. The system of clause 32, wherein the adjustable roof rack is configured to adjust to one of a first level, a second level, and a third level.
35. The system of clause 34, wherein the first level comprises a first predefined height.
36. The system of clause 34, wherein the second level comprises a second predefined height.
37. The system of clause 34, wherein the third level comprises a third predefined height.
38. The system of clause 33, wherein an artificial intelligence module is pretrained using a first dataset comprising vehicle information, vehicle specification, predefined height information of the one or more objects, travel route information, height restriction information of the one or more first restriction obstacles, and height information of the adjustable roof rack.
39. The system of clause 33, wherein an artificial intelligence module is trained using a second dataset to learn and improve.
40. The system of clause 38, wherein the artificial intelligence module communicates a command to the control module, wherein the command instructs the adjustable roof rack to automatically adjust to one of a first level, a second level, and a third level.
41. The system of clause 1, wherein the system comprises a width warning module that operates in tandem with the height warning module.
42. The system of clause 41, wherein the width warning module is configured to:
   detect the one or more objects attached to the vehicle;
   determine a total width of the vehicle, wherein the total width of the vehicle comprises a first width of the vehicle and a second width of the one or more objects;
   obtain the first travel route of the vehicle to reach the destination point;
   extract first width restriction information of the one or more first restriction obstacles located along the first travel route;
   determine a first clearance width based on the total width of the vehicle and the first height restriction information of the one or more first restriction obstacles; and
   compute a second probability of the safe passage of the vehicle along with the one or more objects through the one or more first restriction obstacles as true when the first clearance width is greater than a threshold clearance width.
43. The system of clause 42, wherein the width warning module communicates a command to the electric drive unit of the vehicle through a communication module upon computing the second probability of the safe passage of the vehicle along with the one or more objects through the one or more first restriction obstacles as false.
44. The system of clause 43, wherein the command instructs the electric drive unit to apply autobrake to stop at a predefined distance prior to the one or more first restriction obstacles.
45. A method comprising:
   detecting one or more objects attached to a vehicle;
   determining a total height of the vehicle, wherein the total height of the vehicle comprises a first height of the vehicle and a second height of the one or more objects;
   obtaining a first travel route of the vehicle to reach a destination point;
   extracting first height restriction information of one or more first restriction obstacles located along the first travel route;
   determining a first clearance height based on the total height of the vehicle and the first height restriction information of the one or more first restriction obstacles;
   computing a first probability of safe passage of the vehicle along with the one or more objects through the one or more first restriction obstacles as true when the first clearance height is greater than a threshold clearance height and communicate maneuvering commands to an electric drive unit to maneuver the vehicle; and
   communicating a signal to a control module to dynamically adjust an adjustable roof rack to modify the total height of the vehicle upon computing the first probability as false, wherein the first probability is computed as false when the first clearance height is lesser than the threshold clearance height.
46. The method of clause 45, wherein the second height of the one or more objects comprises a maximum height among the one or more objects.
47. The method of clause 45, further comprising:
   computing one or more second travel routes for the vehicle to reach the destination point.
48. The method of clause 47, wherein computing the one or more second travel routes for the vehicle to reach the destination point comprises:
   identifying a current location of the vehicle;
   obtaining the destination point of the vehicle;
   determining one or more third travel routes that lead to the destination point based on the current location and the destination point;
   extracting second height restriction information of one or more second restriction obstacles located along the one or more third travel routes;
   determining a second clearance height based on the total height of the vehicle and the second height restriction information of the one or more second restriction obstacles; and
   computing a second probability of the safe passage of the vehicle along with the one or more objects through the one or more second restriction obstacles as true when the second clearance height is greater than the threshold clearance height; and
   computing the one or more second travel routes among the one or more third travel routes for the vehicle to reach the destination point, wherein for the one or more second travel routes the second probability is computed as true.
49. The method of clause 45, further comprising:
   communicating a command to the electric drive unit of the vehicle through a communication module upon computing the first probability of the safe passage of the vehicle along with the one or more objects through the one or more first restriction obstacles as false.
50. The method of clause 49, wherein the command instructs the electric drive unit to apply autobrake to stop at a predefined distance prior to the one or more first restriction obstacles.
51. The method of clause 45, further comprising:
   establishing, by a communication module, a wireless communication with at least one of the vehicle, the one or more first restriction obstacles, an external infrastructure, and one or more nearby vehicles.
52. The method of clause 45, further comprising:
   recognizing, interpreting, and analyzing, by a natural language processing (NLP) module, one or more contexts of at least one of a message, an indication, a traffic sign, a text, and an image through an artificial intelligence.
53. The method of clause 45, further comprising:
   pretraining, an artificial intelligence module, using a first dataset comprising one or more traffic signs, one or more messages, one or more indications, one or more texts, one or more images, and one or more videos to recognize, interpret, and understand one or more contexts.
54. The method of clause 53, further comprising:
   training the artificial intelligence module using a second dataset to learn, improve and
   understand the one or more contexts in an optimized way.
55. The method of clause 52, further comprising:
   interpreting and analyzing, by an artificial intelligence module, the one or more contexts and communicating a command to the electric drive unit based on the one or more contexts.
56. The method of clause 45, further comprising:
   dynamically adjusting the adjustable roof rack in order to lower the total height of the vehicle.
57. The method of clause 56, further comprising:
   dynamically adjusting the adjustable roof rack to one of a first level, a second level, and a third level.
58. The method of clause 56, further comprising:
   dynamically adjusting the adjustable roof rack to one of a first level, a second level, and a third level based on a command received from an artificial intelligence module.
59. The method of clause 45, further comprising:
   detecting the one or more objects attached to the vehicle;
   determining a total width of the vehicle, wherein the total width of the vehicle comprises a first width of the vehicle and a second width of the one or more objects;
   obtaining the first travel route of the vehicle to reach the destination point;
   extracting first width restriction information of the one or more first restriction obstacles located along the first travel route;
   determining a first clearance width based on the total width of the vehicle and the first height restriction information of the one or more first restriction obstacles; and
   computing a second probability of the safe passage of the vehicle along with the one or more objects through the one or more first restriction obstacles as true when the first clearance width is greater than a threshold clearance width.
60. The method of clause 59, further comprising:
   communicating a command to the electric drive unit of the vehicle through a communication module upon computing the second probability of the safe passage of the vehicle along with the one or more objects through the one or more first restriction obstacles as false.
61. The method of clause 60, wherein the command instructs the electric drive unit to apply autobrake to stop at a predefined distance prior to the one or more first restriction obstacles.
62. A non-transitory storage medium storing a sequence of instructions which when executed by a processor causes:
   detecting one or more objects attached to a vehicle;
   determining a total height of the vehicle, wherein the total height of the vehicle comprises a first height of the vehicle and a second height of the one or more objects;
   obtaining a first travel route of the vehicle to reach a destination point;
   extracting first height restriction information of one or more first restriction obstacles located along the first travel route;
   determining a first clearance height based on the total height of the vehicle and the first height restriction information of the one or more first restriction obstacles;
   computing a first probability of safe passage of the vehicle along with the one or more objects through the one or more first restriction obstacles as true when the first clearance height is greater than a threshold clearance height and communicate maneuvering commands to an electric drive unit to maneuver the vehicle; and
   communicating a signal to a control module to dynamically adjust an adjustable roof rack to modify the total height of the vehicle upon computing the first probability as false, wherein the first probability is computed as false when the first clearance height is lesser than the threshold clearance height.
63. The non-transitory storage medium of clause 62, further causes:
   computing one or more second travel routes for the vehicle to reach the destination point.
64. The non-transitory storage medium of clause 63, wherein computing the one or more
   second travel routes for the vehicle to reach the destination point causes:
   identifying a current location of the vehicle;
   obtaining the destination point of the vehicle;
   determining one or more third travel routes that lead to the destination point based on the current location and the destination point;
   extracting second height restriction information of one or more second restriction obstacles located along the one or more third travel routes;
   determining a second clearance height based on the total height of the vehicle and the second height restriction information of the one or more second restriction obstacles; and
   computing a second probability of the safe passage of the vehicle along with the one or more objects through the one or more second restriction obstacles as true when the second clearance height is greater than the threshold clearance height; and
   computing the one or more second travel routes among the one or more third travel routes for the vehicle to reach the destination point, wherein for the one or more second travel routes the second probability is computed as true.
65. The non-transitory storage medium of clause 62, further causes:
   communicating a command to the electric drive unit of the vehicle through a communication module upon computing the first probability of the safe passage of the vehicle along with the one or more objects through the one or more first restriction obstacles as false.
66. The non-transitory storage medium of clause 65, wherein the command instructs the electric drive unit to apply autobrake to stop at a predefined distance prior to the one or more first restriction obstacles.
67. The non-transitory storage medium of clause 62, further causes:
   establishing, by a communication module, a wireless communication with at least one of the vehicle, the one or more first restriction obstacles, an external infrastructure, and one or more nearby vehicles.
68. The non-transitory storage medium of clause 62, further causes:
   recognizing, interpreting, and analyzing, by a natural language processing (NLP) module, one or more contexts of at least one of a message, an indication, a traffic sign, a text, and an image through an artificial intelligence.
69. The non-transitory storage medium of clause 62, further causes:
   pretraining, an artificial intelligence module, using a first dataset comprising one or more traffic signs, one or more messages, one or more indications, one or more texts, one or more images,
   and one or more videos to recognize, interpret, and understand one or more contexts.
70. The non-transitory storage medium of clause 69, further causes:
   training the artificial intelligence module using a second dataset to learn, improve and
   understand the one or more contexts in an optimized way.
71. The non-transitory storage medium of clause 68, further causes:
   interpreting and analyzing, by an artificial intelligence module, the one or more contexts and
   communicating a command to the electric drive unit based on the one or more contexts.
72. The non-transitory storage medium of clause 62, further causes:
   dynamically adjusting the adjustable roof rack in order to lower the total height of the vehicle.
73. The non-transitory storage medium of clause 72, further causes:
   dynamically adjusting the adjustable roof rack to one of a first level, a second level, and a third level.
74. The non-transitory storage medium of clause 72, further causes:
   dynamically adjusting the adjustable roof rack to one of a first level, a second level, and a third level based on a command received from an artificial intelligence module.
75. The non-transitory storage medium of clause 62, further causes:
   detecting the one or more objects attached to the vehicle;
   determining a total width of the vehicle, wherein the total width of the vehicle comprises a first width of the vehicle and a second width of the one or more objects;
   obtaining the first travel route of the vehicle to reach the destination point;
   extracting first width restriction information of the one or more first restriction obstacles located along the first travel route;
   determining a first clearance width based on the total width of the vehicle and the first height restriction information of the one or more first restriction obstacles; and
   computing a second probability of the safe passage of the vehicle along with the one or more objects through the one or more first restriction obstacles as true when the first clearance width is greater than a threshold clearance width.
76. The non-transitory storage medium of clause 75, further causes:
   communicating a command to the electric drive unit of the vehicle through a communication module upon computing the second probability of the safe passage of the vehicle along with the one or more objects through the one or more first restriction obstacles as false.
77. The non-transitory storage medium of clause 76, wherein the command instructs the electric drive unit to apply autobrake to stop at a predefined distance prior to the one or more first restriction obstacles.

## Claims

1. A system comprising:
a height warning module that is configured to:
detect one or more objects attached to a vehicle (402);
determine a total height of the vehicle (404), wherein the total height of the vehicle comprises a first height of the vehicle and a second height of the one or more objects;
obtain a first travel route of the vehicle to reach a destination point (406);
extract first height restriction information of one or more first restriction obstacles located along the first travel route (408);
determine a first clearance height based on the total height of the vehicle and the first height restriction information of the one or more first restriction obstacles (410);
compute a first probability of safe passage of the vehicle along with the one or more objects through the one or more first restriction obstacles as true when the first clearance height is greater than a threshold clearance height and communicate maneuvering instructions to an electric drive unit to maneuver the vehicle (412); and
communicate a signal to a control module (202) to dynamically adjust an adjustable roof rack (214) to reduce the total height of the vehicle upon computing the first probability as false (414), wherein the first probability is computed as false when the first clearance height is lesser than the threshold clearance height.

2. The system of claim 1, wherein the system comprises one or more sensors comprising at least one of a laser sensor, a stadiometer, a distance sensor, a camera, a photoelectric sensor, a measurement sensor, and an ultrasonic sensor.

3. The system of claim 1, wherein the system communicates a command to the electric drive unit (204) of the vehicle through a communication module upon computing the first probability of the safe passage of the vehicle along with the one or more objects through the one or more first restriction obstacles as false.

4. The system of claim 3, wherein the command instructs the electric drive unit (204) to apply autobrake to stop at a predefined distance prior to the one or more first restriction obstacles.

5. The system of claim 1, wherein the vehicle comprises the control module (202) that communicates a command to the electric drive unit (204), and wherein the control module (202) preferably comprises a natural language processing module configured to recognize, interpret, and understand at least one of a message, an audio, an indication, a traffic sign, a text, and an image.

6. The system of claim 1, wherein the system comprises an artificial intelligence module (208) pretrained using a first dataset comprising one or more traffic signs, one or more messages, one or more indications, one or more texts, one or more images, and one or more videos to recognize, interpret, and understand one or more contexts, and wherein the artificial intelligence module is preferably trained using a second dataset to learn, improve and understand the one or more contexts in an optimized way.

7. The system of claim 6, wherein the artificial intelligence module (208) understands the one or more contexts and communicates a command that instructs at least one of the electric drive unit (204) and the control module (202) to perform a predefined action upon reaching the one or more first restriction obstacles, and wherein preferably the predefined action comprises at least one of applying an autobrake, passing through the one or more first restriction obstacles, stopping before the one or more first restriction obstacles, taking a second travel route, and adjusting the adjustable roof rack (214).

8. The system of claim 1, wherein the vehicle comprises the adjustable roof rack (214) that holds the one or more objects and dynamically adjusts based on a command received from the control module (202) to one of a first level, a second level, and a third level.

9. The system of claim 1, wherein the system comprises a width warning module that operates in tandem with the height warning module, the width warning module is configured to:
detect the one or more objects attached to the vehicle;
determine a total width of the vehicle, wherein the total width of the vehicle comprises a first width of the vehicle and a second width of the one or more objects;
obtain the first travel route of the vehicle to reach the destination point;
extract first width restriction information of the one or more first restriction obstacles located along the first travel route;
determine a first clearance width based on the total width of the vehicle and the first height restriction information of the one or more first restriction obstacles; and
compute a second probability of the safe passage of the vehicle along with the one or more objects through the one or more first restriction obstacles as true when the first clearance width is greater than a threshold clearance width, and wherein the width warning module preferably communicates a command to the electric drive unit of the vehicle through a communication module upon computing the second probability of the safe passage of the vehicle along with the one or more objects through the one or more first restriction obstacles as false.

10. A method comprising:
detecting one or more objects attached to a vehicle (502);
determining a total height of the vehicle, wherein the total height of the vehicle comprises a first height of the vehicle and a second height of the one or more objects (504);
obtaining a first travel route of the vehicle to reach a destination point (506);
extracting first height restriction information of one or more first restriction obstacles located along the first travel route (508);
determining a first clearance height based on the total height of the vehicle and the first height restriction information of the one or more first restriction obstacles (510);
computing a first probability of safe passage of the vehicle along with the one or more objects through the one or more first restriction obstacles as true when the first clearance height is greater than a threshold clearance height and communicate maneuvering instructions to an electric drive unit to maneuver the vehicle (512); and
communicating a signal to a control module to dynamically adjust an adjustable roof rack (214) to modify the total height of the vehicle upon computing the first probability as false (514), wherein the first probability is computed as false when the first clearance height is lesser than the threshold clearance height.

11. The method of claim 10, further comprising:
computing one or more second travel routes for the vehicle to reach the destination point.

12. The method of claim 11, wherein computing the one or more second travel routes for the vehicle to reach the destination point comprises:
identifying a current location of the vehicle;
obtaining the destination point of the vehicle;
determining one or more third travel routes that leads to the destination point based on the current location and the destination point;
extracting second height restriction information of one or more second restriction obstacles located along the one or more third travel routes;
determining a second clearance height based on the total height of the vehicle and the second height restriction information of the one or more second restriction obstacles; and
computing a second probability of the safe passage of the vehicle along with the one or more objects through the one or more second restriction obstacles as true when the second clearance height is greater than the threshold clearance height; and
computing the one or more second travel routes among the one or more third travel routes for the vehicle to reach the destination point, wherein for the one or more second travel routes the second probability is computed as true.

13. A non-transitory storage medium storing a sequence of instructions which when executed by a processor causes:
detecting one or more objects attached to a vehicle (602);
determining a total height of the vehicle, wherein the total height of the vehicle comprises a first height of the vehicle and a second height of the one or more objects (604);
obtaining a first travel route of the vehicle to reach a destination point (606);
extracting first height restriction information of one or more first restriction obstacles located along the first travel route (608);
determining a first clearance height based on the total height of the vehicle and the first height restriction information of the one or more first restriction obstacles (610);
computing a first probability of safe passage of the vehicle along with the one or more objects through the one or more first restriction obstacles as true when the first clearance height is greater than a threshold clearance height and communicate maneuvering instructions to an electric drive unit to maneuver the vehicle (612); and
communicating a signal to a control module to dynamically adjust an adjustable roof rack (214) to modify the total height of the vehicle upon computing the first probability as false (614), wherein the first probability is computed as false when the first clearance height is lesser than the threshold clearance height.

14. The non-transitory storage medium of claim 13, wherein computing one or more second travel routes for the vehicle to reach the destination point causes:
identifying a current location of the vehicle;
obtaining the destination point of the vehicle;
determining one or more third travel routes that leads to the destination point based on the current location and the destination point;
extracting second height restriction information of one or more second restriction obstacles located along the one or more third travel routes;
determining a second clearance height based on the total height of the vehicle and the second height restriction information of the one or more second restriction obstacles; and
computing a second probability of the safe passage of the vehicle along with the one or more objects through the one or more second restriction obstacles as true when the second clearance height is greater than the threshold clearance height; and
computing the one or more second travel routes among the one or more third travel routes for the vehicle to reach the destination point, wherein for the one or more second travel routes the second probability is computed as true.

15. The non-transitory storage medium of claim 14, further causes:
dynamically adjusting the adjustable roof rack (214) to one of a first level, a second level, and a third level based on a command received from an artificial intelligence module (208).

## Amended claims

### Amended claims in accordance with Rule 137(2) EPC.

1. A system comprising:
a height warning module that is configured to:
detect one or more objects attached to a vehicle (402);
determine a total height of the vehicle (404), wherein the total height of the vehicle comprises a first height of the vehicle and a second height of the one or more objects;
obtain a first travel route of the vehicle to reach a destination point (406);
extract first height restriction information of one or more first restriction obstacles located along the first travel route (408);
determine a first clearance height based on the total height of the vehicle and the first height restriction information of the one or more first restriction obstacles (410);
compute a first probability of safe passage of the vehicle along with the one or more objects through the one or more first restriction obstacles as true when the first clearance height is greater than a threshold clearance height and communicate maneuvering instructions to an electric drive unit to maneuver the vehicle (412); and
communicate a signal to a control module (202) to dynamically adjust an adjustable roof rack (214) to reduce the total height of the vehicle upon computing the first probability as false (414), wherein the first probability is computed as false when the first clearance height is lesser than the threshold clearance height.

2. The system of claim 1, wherein the system comprises one or more sensors comprising at least one of a laser sensor, a stadiometer, a distance sensor, a camera, a photoelectric sensor, a measurement sensor, and an ultrasonic sensor.

3. The system of claim 1, wherein the system communicates a command to the electric drive unit (204) of the vehicle through a communication module upon computing the first probability of the safe passage of the vehicle along with the one or more objects through the one or more first restriction obstacles as false.

4. The system of claim 3, wherein the command instructs the electric drive unit (204) to apply autobrake to stop at a predefined distance prior to the one or more first restriction obstacles.

5. The system of claim 1, wherein the vehicle comprises the control module (202) that communicates a command to the electric drive unit (204).

6. The system of claim 1, wherein the system comprises an artificial intelligence module (208) pretrained using a first dataset comprising one or more traffic signs, one or more messages, one or more indications, one or more texts, one or more images, and one or more videos to recognize, interpret, and understand one or more contexts, and wherein the artificial intelligence module is preferably trained using a second dataset to learn, improve and understand the one or more contexts in an optimized way, wherein the artificial intelligence module (208) understands the one or more contexts and communicates a command that instructs at least one of the electric drive unit (204) and the control module (202) to perform a predefined action upon reaching the one or more first restriction obstacles, and wherein preferably the predefined action comprises at least one of applying an autobrake, passing through the one or more first restriction obstacles, stopping before the one or more first restriction obstacles, taking a second travel route, and adjusting the adjustable roof rack (214).

7. The system of claim 1, wherein the vehicle comprises the adjustable roof rack (214) that holds the one or more objects and dynamically adjusts based on a command received from the control module (202) to one of a first level, a second level, and a third level.

8. The system of claim 1, wherein the system comprises a width warning module that operates in tandem with the height warning module, the width warning module is configured to:
detect the one or more objects attached to the vehicle;
determine a total width of the vehicle, wherein the total width of the vehicle comprises a first width of the vehicle and a second width of the one or more objects;
obtain the first travel route of the vehicle to reach the destination point;
extract first width restriction information of the one or more first restriction obstacles located along the first travel route;
determine a first clearance width based on the total width of the vehicle and the first height restriction information of the one or more first restriction obstacles; and
compute a second probability of the safe passage of the vehicle along with the one or more objects through the one or more first restriction obstacles as true when the first clearance width is greater than a threshold clearance width, and wherein the width warning module preferably communicates a command to the electric drive unit of the vehicle through a communication module upon computing the second probability of the safe passage of the vehicle along with the one or more objects through the one or more first restriction obstacles as false.

9. A method comprising:
detecting, by a height warning module, one or more objects attached to a vehicle (502);
determining, by the height warning module, a total height of the vehicle, wherein the total height of the vehicle comprises a first height of the vehicle and a second height of the one or more objects (504);
obtaining, by the height warning module, a first travel route of the vehicle to reach a destination point (506);
extracting, by the height warning module, first height restriction information of one or more first restriction obstacles located along the first travel route (508);
determining, by the height warning module, a first clearance height based on the total height of the vehicle and the first height restriction information of the one or more first restriction obstacles (510);
computing, by the height warning module, a first probability of safe passage of the vehicle along with the one or more objects through the one or more first restriction obstacles as true when the first clearance height is greater than a threshold clearance height and communicate maneuvering instructions to an electric drive unit to maneuver the vehicle (512); and
communicating, by the height warning module, a signal to a control module to dynamically adjust an adjustable roof rack (214) to modify the total height of the vehicle upon computing the first probability as false (514), wherein the first probability is computed as false when the first clearance height is lesser than the threshold clearance height.

10. The method of claim 9, further comprising:
computing one or more second travel routes for the vehicle to reach the destination point.

11. The method of claim 10, wherein computing the one or more second travel routes for the vehicle to reach the destination point comprises:
identifying a current location of the vehicle;
obtaining the destination point of the vehicle;
determining one or more third travel routes that leads to the destination point based on the current location and the destination point;
extracting second height restriction information of one or more second restriction obstacles located along the one or more third travel routes;
determining a second clearance height based on the total height of the vehicle and the second height restriction information of the one or more second restriction obstacles; and
computing a second probability of the safe passage of the vehicle along with the one or more objects through the one or more second restriction obstacles as true when the second clearance height is greater than the threshold clearance height; and
computing the one or more second travel routes among the one or more third travel routes for the vehicle to reach the destination point, wherein for the one or more second travel routes the second probability is computed as true.

12. A non-transitory storage medium storing a sequence of instructions which when executed by a processor causes:
detecting one or more objects attached to a vehicle (602);
determining a total height of the vehicle, wherein the total height of the vehicle comprises a first height of the vehicle and a second height of the one or more objects (604);
obtaining a first travel route of the vehicle to reach a destination point (606);
extracting first height restriction information of one or more first restriction obstacles located along the first travel route (608);
determining a first clearance height based on the total height of the vehicle and the first height restriction information of the one or more first restriction obstacles (610);
computing a first probability of safe passage of the vehicle along with the one or more objects through the one or more first restriction obstacles as true when the first clearance height is greater than a threshold clearance height and communicate maneuvering instructions to an electric drive unit to maneuver the vehicle (612); and
communicating a signal to a control module to dynamically adjust an adjustable roof rack (214) to modify the total height of the vehicle upon computing the first probability as false (614), wherein the first probability is computed as false when the first clearance height is lesser than the threshold clearance height.

13. The non-transitory storage medium of claim 12, wherein computing one or more second travel routes for the vehicle to reach the destination point causes:
identifying a current location of the vehicle;
obtaining the destination point of the vehicle;
determining one or more third travel routes that leads to the destination point based on the current location and the destination point;
extracting second height restriction information of one or more second restriction obstacles located along the one or more third travel routes;
determining a second clearance height based on the total height of the vehicle and the second height restriction information of the one or more second restriction obstacles; and
computing a second probability of the safe passage of the vehicle along with the one or more objects through the one or more second restriction obstacles as true when the second clearance height is greater than the threshold clearance height; and
computing the one or more second travel routes among the one or more third travel routes for the vehicle to reach the destination point, wherein for the one or more second travel routes the second probability is computed as true.

14. The non-transitory storage medium of claim 13, further causes:
dynamically adjusting the adjustable roof rack (214) to one of a first level, a second level, and a third level based on a command received from an artificial intelligence module (208), wherein the artificial intelligence module (208) is pretrained using a first dataset comprising vehicle information, vehicle specification, predefined height information of the one or more objects, travel route information, height restriction information of the one or more first restriction obstacles, and height information of the adjustable roof rack.
